# EUROPEAN PATENT APPLICATION

(11) **EP 4 467 440 A1**
(43) Date of publication of application: **27.11.2024**
(21) Application number: 23743535.9
(22) Date of filing: 20.01.2023
(51) Int. Cl.: B63B 15/00, B63B 25/16, B63B 11/00, B63H 21/36, B63H 21/32, B63B 1/06, B63B 1/08, B63H 9/061

(54) **SHIP**

(30) Priority: 21.01.2022 KR 20220009521; 23.12.2022 KR 20220183610; 23.12.2022 US 202263435164 P
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR)
(72) Inventor: KIM, Doo Hyun, Seoul 03058 (KR); LEE, Dong Jin, Ulsan 44032 (KR); SUNG, Chang Kyung, Ulsan 44032 (KR); KWON, Dae Hyuk, Ulsan 44032 (KR)
(74) Representative: Betten & Resch
(86) International application number: PCT/KR2023/001029
(87) International publication number: WO 2023/140692

(57) **Abstract**

The present disclosure relates to a ship, and in a ship including a cargo area for storing cargo, a forecastle area provided fore of the cargo area, and an aft area provided aft of the cargo area, the forecastle area includes a fore deck dividing an interior and an exterior of a hull, and a cabin is provided on an upper part of the fore deck, wherein the cabin has a flat cross-section with a width that decreases forward toward a bow.

## Description

### Technical Field

The present disclosure relates to a ship.

### Background Art

A ship performs the function of transporting cargo by loading cargo and moving from the origin to the destination while floating on the sea. These ships have different hull structures as well as inboard and outboard structures depending on the type of cargo.

In particular, ships are provided with cabins, and the location of the cabins is fixed for each type of ship, depending on the type of cargo area formed on the ship. Specifically, in the case of a gas carrier that transports gas, the cabin is arranged at the stern, and in the case of a container ship, the cabin is arranged in the central portion.

However, since a steering house is provided at the upper part of the cabin, the arrangement of the cabin is an important factor in determining the forward view when operating the ship. In addition, the cabin is a structure with relatively large left and right width and height, which causes air resistance during the operation of the ship. Furthermore, since the cabin contains the crew's residential quarters, it must be zoned as a safe space.

In such a situation, many attempts are being made to change the structure or arrangement of cabins to increase the operating efficiency of ships.

### Disclosure of the Invention

### Technical Goals

The present disclosure has been proposed to solve the problems of the related art as described above, and an object of the present disclosure is to provide a ship that is capable of maximizing the operating efficiency of the ship by effectively changing the arrangement or structure of the stern while arranging the cabin at the bow.

### Technical Solutions

A ship according to an aspect of the present disclosure includes a cargo area for storing cargo, a forecastle area provided fore of the cargo area, and an aft area provided aft of the cargo area, wherein the forecastle area includes a fore deck dividing an interior and an exterior of a hull, and a cabin is provided on an upper part of the fore deck, and wherein the cabin has a flat cross-section with a width that decreases forward toward a bow.

Specifically, the cabin may include a steering house and a residence room provided in a lower part of the steering house.

Specifically, the cabin may have a shape in which, compared to a lower part forming the residence room, an upper part forming the steering house is receded.

Specifically the cabin may have a steering deck forming a floor of the steering house, and the lower part forming the residence room and the upper part forming the steering house may be connected vertically with a step relative to the steering deck.

Specifically, the cabin may have a shape in which, the lower part forming the residence room has a flat cross-section that decreases upward, and the upper part forming the steering house has a flat cross-section that increases upward.

Specifically, the cabin may further include a cargo management room provided aft of the steering house toward the cargo area.

Specifically, the cabin may be arranged to be spaced apart from the cargo area and at least a rear surface of the residence room provided aft of the cabin may be exposed to the outside.

Specifically, the residence room may be provided on the fore deck, and at least a front surface of the residence room may be exposed to the outside.

Specifically, the fore deck may form a sunken deck.

A ship according to an aspect of the present disclosure includes a cargo area for storing cargo, a forecastle area provided fore of the cargo area, and an aft area provided aft of the cargo area, wherein the forecastle area includes a fore deck dividing an interior and an exterior of a hull, and a cabin is provided on an upper part of the fore deck, wherein the cabin has at least a fore with a flat cross-section similar to the fore deck.

Specifically, the cabin may be supported by a support so that a lower surface of the cabin is spaced a certain height above the fore deck.

Specifically, the fore deck may form a sunken deck.

### Advantageous Effects

A ship according to the present disclosure may increase operating efficiency by reducing air resistance by arranging the cabin including the steering house at the bow rather than at the stern, changing the shape of the cabin to a streamlined shape, and lowering the height of the cabin.

### Brief Description of Drawings

FIG. 1 is a perspective view of a ship in accordance with a first embodiment of the present disclosure.
FIG. 2 is a side view of the ship in accordance with the first embodiment of the present disclosure.
FIG. 3 is a front view of the ship in accordance with the first embodiment of the present disclosure.
FIG. 4 is a front cross-sectional view of the ship in accordance with the first embodiment of the present disclosure.
FIG. 5 is a plan view of the ship in accordance with the first embodiment of the present disclosure.
FIG. 6 is a partial side view of the ship in accordance with the first embodiment of the present disclosure.
FIG. 7 is a partial side view of the ship in accordance with the first embodiment of the present disclosure.
FIG. 8 is a partial perspective view of the ship in accordance with the first embodiment of the present disclosure.
FIG. 9 is a partial perspective view of the ship in accordance with the first embodiment of the present disclosure.
FIG. 10 is a partial side view of the ship in accordance with the first embodiment of the present disclosure.
FIG. 11 is a partial plan view of the ship in accordance with the first embodiment of the present disclosure.
FIG. 12 is a partial front view of the ship in accordance with the first embodiment of the present disclosure.
FIG. 13 is a partial front view of the ship in accordance with the first embodiment of the present disclosure.
FIG. 14 is a partial side view of a ship in accordance with a second embodiment of the present disclosure.
FIG. 15 is a partial plan view of a ship in accordance with a third embodiment of the present disclosure.
FIG. 16 is a partial side view of a ship in accordance with a fourth embodiment of the present disclosure.
FIG. 17 is a side view of a ship in accordance with a fifth embodiment of the present disclosure.
FIG. 18 is a partial side view of a ship in accordance with a sixth embodiment of the present disclosure.
FIG. 19 is a side view of a ship in accordance with a seventh embodiment of the present disclosure.

### Best Mode for Carrying Out the Invention

The objects, specific advantages and novel features of the present disclosure will become more apparent from the following detailed description and preferred embodiments taken in conjunction with the accompanying drawings. In the present specification, in adding reference numerals to the components of each drawing, it should be noted that only the same components are given the same numeral as possible even though they are indicated on different drawings. In addition, in describing the present disclosure, if it is determined that a detailed description of a related known art may unnecessarily obscure the subject matter of the present disclosure, the detailed description thereof will be omitted.

In addition, it should be noted that the expression 'conventional' in the present disclosure merely corresponds to a comparative example to explain the characteristics of the present disclosure, and does not necessarily mean that the content is publicly known.

In the present specification, a ship may be a merchant ship carrying various types of cargo. Here, the cargo may be a standardized object or material, and may be a container, etc. Alternatively, the cargo may be gas, and in this case, the gas is a substance whose boiling point is lower than room temperature and is transported in liquid form, and may be LNG, LPG, ethane, methanol, ammonia, hydrogen, CO2, etc. In other words, the type of ship is not limited in the present disclosure.

Furthermore, the ship of the present disclosure is a concept that includes not only merchant ships transporting cargo, but also cruise ships transporting people, FSRUs moored and working in a certain area, FPSOs, bunkering vessels, offshore plants, etc.

Hereinafter, preferred embodiments of the present disclosure will be described in detail with reference to the accompanying drawings. For reference, in the following, a longitudinal direction and an anteroposterior direction of the ship are the same, a width direction of the ship is the same as a horizontal direction, and a height direction of the ship is the same as a vertical direction. In addition, a deck is a part provided horizontally in the hull, and the deck may be provided at a certain height above the lower surface of the hull. In other words, hereinafter, a deck height refers to the height in the vertical direction based on the base line. The deck may have an entirely flat surface or a sloping surface. In the latter case, the height of the deck means either the average height, minimum height or maximum height.

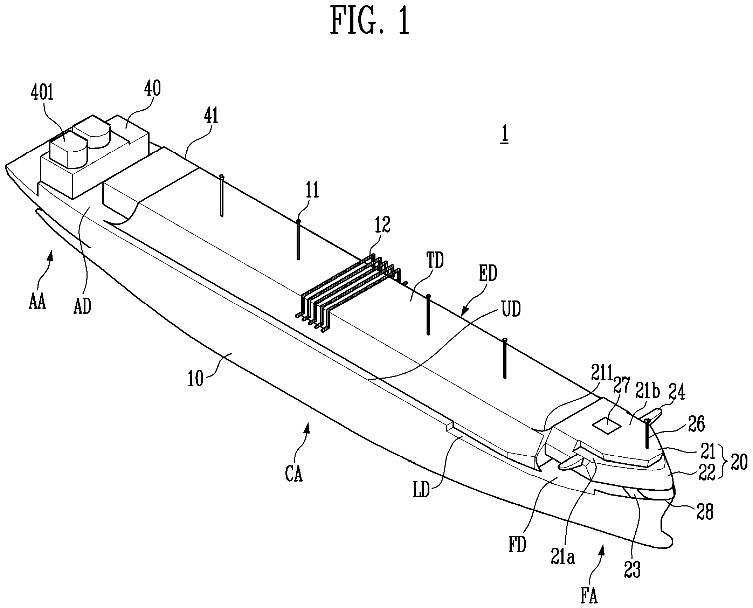

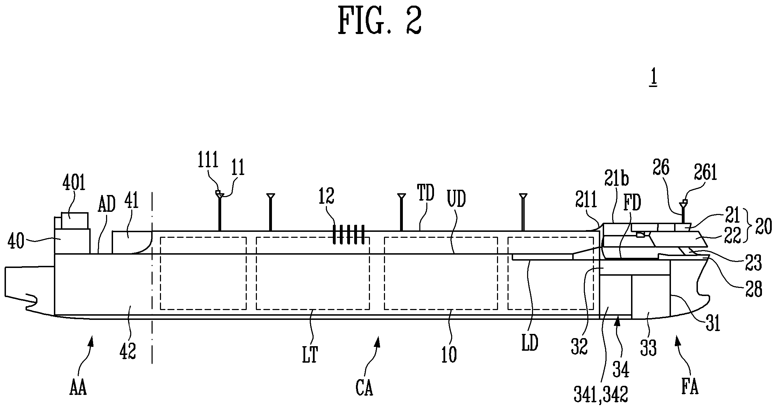

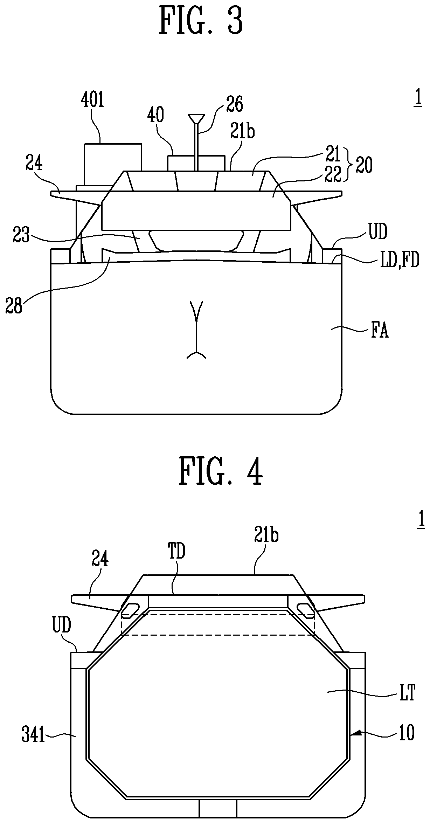

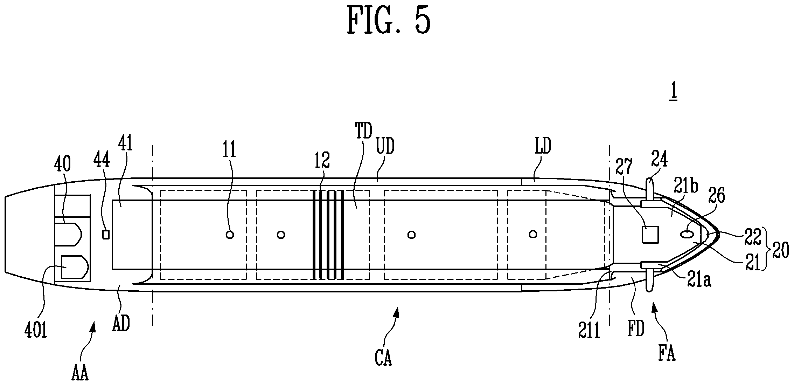

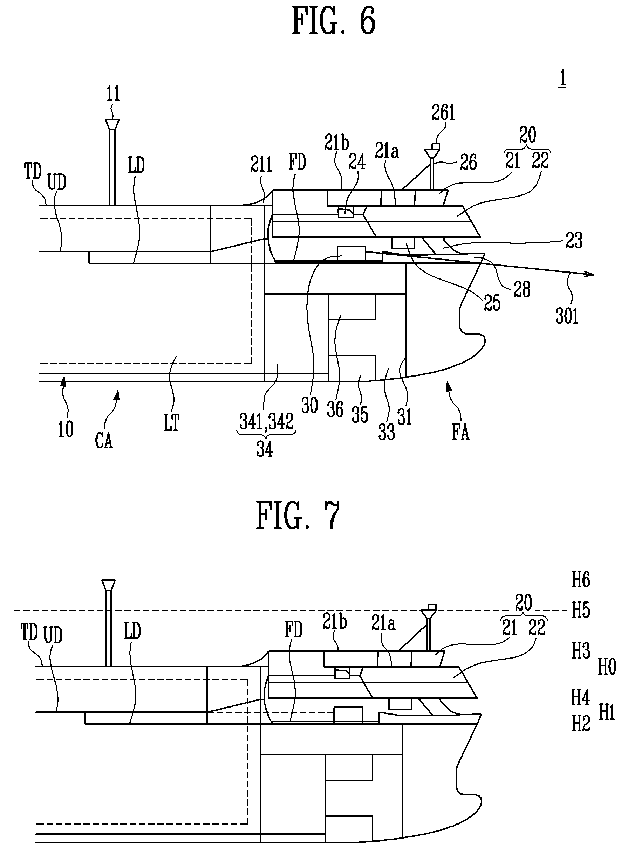

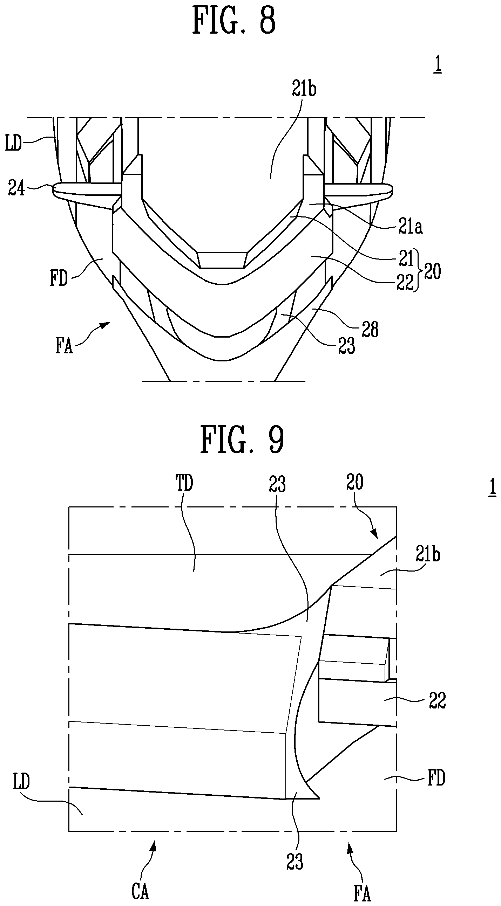

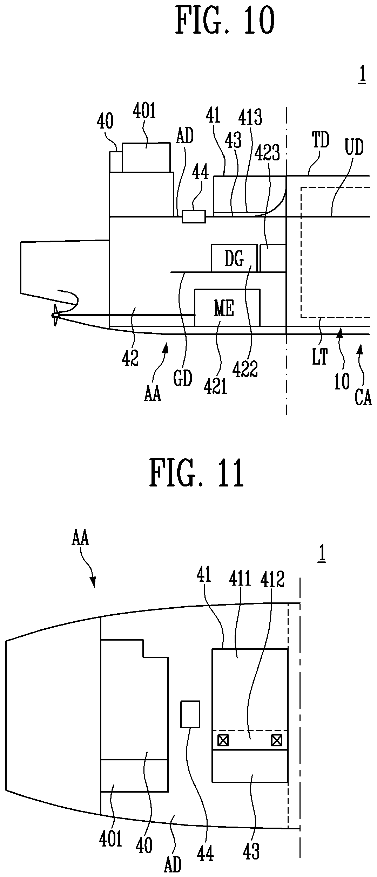

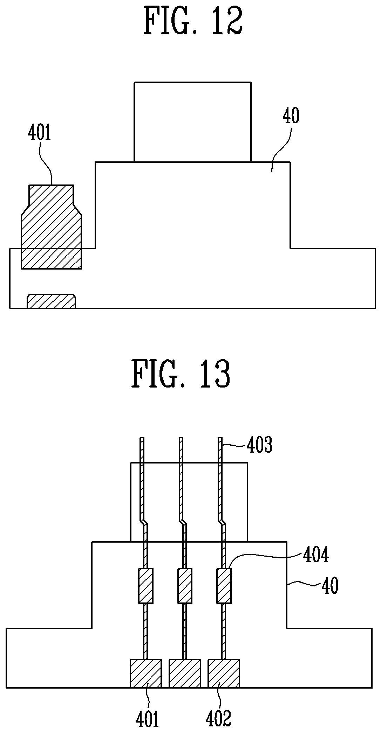

FIG. 1 is a perspective view of a ship in accordance with a first embodiment of the present disclosure, FIG. 2 is a side view of the ship in accordance with the first embodiment of the present disclosure, and FIG. 3 is a front view of the ship in accordance with the first embodiment of the present disclosure. In addition, FIG. 4 is a front cross-sectional view of the ship in accordance with the first embodiment of the present disclosure, FIG. 5 is a plan view of the ship in accordance with the first embodiment of the present disclosure, and FIG. 6 and FIG. 7 are partial side views of the ship in accordance with the first embodiment of the present disclosure. FIG. 8 is a partial perspective view of the ship in accordance with the first embodiment of the present disclosure, and FIG. 9 is a partial perspective view of the ship in accordance with the first embodiment of the present disclosure. FIG. 10 is a partial side view of the ship in accordance with the first embodiment of the present disclosure. In addition, FIG. 11 is a partial plan view of the ship in accordance with the first embodiment of the present disclosure, and FIG. 12 and FIG. 13 are partial front views of the ship in accordance with the first embodiment of the present disclosure.

As described above, the present disclosure may be a ship 1 that carries cargo not limited to types, but the first embodiment will be described below for convenience on the assumption that it is a liquefied natural gas carrier. In addition, hereinafter, liquefied natural gas may be referred to as liquefied gas or fuel, and may be in a gaseous or liquid state. In other words, despite expressions such as liquefied natural gas or liquefied gas, the substance may be in a gaseous state.

Referring to FIGS. 1 to 13, the ship 1 in accordance with the first embodiment of the present invention disclosure includes a hull. The hull is a structure that forms the outer surface of the ship 1 and is long in length and relatively small in width and height. The hull may be divided into interior and exterior, and cargo, engines 421 and 422, etc., are provided inside the hull. In addition, a cabin 20, an engine casing 40, propulsion equipment, mooring equipment 30, and various other design equipment or electrical equipment may be provided outside the hull.

In the present disclosure, the ship 1 may be divided into a cargo area (CA), a forecastle area (FA), and an aft area (AA), and these areas are a concept that encompasses both the interior and exterior of the hull, and may also include other structures or equipment added to the hull. The CA, FA, and AA may be partitioned longitudinally of the ship 1 of the present disclosure. Hereinafter, the features of the present disclsoure are described in detail for each area.

The CA stores cargo. The CA may refer to approximately the central portion of the hull. The hull has the largest apical cross-section in the central portion in the longitudinal direction, and the apical cross-section may be reduced in the forward portion and rearward portion. In this case, the CA may include the central portion of the hull with a constant apical cross-section in the anteroposterior direction.

Furthermore, the CA may further include at least a portion of a forward portion and a rearward portion of the hull whose apical cross-section is somewhat reduced. For example, in the CA, the forward portion may have a smaller apical cross-section than other portions.

As described above, the CA may store an unlimited variety of cargo types. However, in the present embodiment, when the ship 1 is a liquefied natural gas carrier, the CA may store liquefied natural gas. For this purpose, a liquefied gas storage tank (LT) may be provided in the CA. The CA may accommodate the LT inside the hull. A plurality of LTs are provided in the longitudinal direction of the hull, and LTs adjacent front and rear may be arranged to be spaced apart from each other by a bulkhead.

The LT may be a tank that stores liquefied natural gas at cryogenic temperatures below the boiling point, and in this case, the volume of liquefied natural gas is reduced to approximately 1/600 compared to the gas phase, greatly increasing storage efficiency.

However, the LT may be equipped with an insulation system to maintain the temperature of the liquefied gas stored at cryogenic temperatures. The insulation system may include an insulation wall and a barrier installed on the inner wall of the LT, and the insulation wall and barrier may be provided in at least a double layer structure. This type of LT may be referred to as a membrane tank.

On the other hand, the LT may have insulation walls installed on the exterior walls. In this case, the LT may be manufactured externally separately from the hull and then mounted within the hull, and this type of LT may be referred to as an independent tank. However, the following present embodiment will be described assuming that a membrane tank is provided.

The LT may be provided to be surrounded on both the top, bottom, left, and right sides by the hull, and a ballast tank 341 and a pipe duct may be provided in the lower part of the LT in the hull. In addition, ballast tanks 341 may also be provided on the left and right sides of the LT in the hull. A fuel line, which will be described later, may be provided in the pipe duct, and the fuel passing through the pipe duct may be a material with a boiling point above room temperature, unlike liquefied gas, which is cargo. Therefore, the fuel line within the pipe duct may be of a type that does not require significant insulation.

A passage way through which workers (crew members) may move may be provided at the upper part of the LT in the hull. In addition the upper surface of the LT may be referred to as an inner deck, and an exposure deck (ED) exposed to the outside is provided on the upper part of the inner deck.

The LT may have an octagonal cross-section in order to secure maximum volume in consideration of the cross-sectional shape of the hull. In this case, the ED may also be provided to correspond to the upper polygonal structure of the LT.

For example, the ED has the highest central portion in the width direction, and this portion may be referred to as a trunk deck (TD). The TD is provided on the upper part of the inner deck, and longitudinal strength members (girders, stiffeners, etc.) may be provided between the TD and the inner deck to ensure longitudinal strength in the longitudinal direction. These longitudinal strength members maintain the strength of the hull upon movement, such as hogging or sagging of the hull.

As will be described later, the present disclosure goes further than securing longitudinal strength with longitudinal strength members provided in the CA, and may increase longitudinal strength through structures such as the cabin 20 or a cargo handling room 41. In other words, the longitudinal strength member is connected to the cabin 20, etc., in the anteroposterior direction, so that the total length of the longitudinal strength member is extended with respect to the hull, thereby improving the longitudinal strength.

The TD and inner deck are used as spaces to isolate the LT from the outside, and may prepare for leaks from the LT. However, the LT is provided with a dome (not shown) for the outflow or inflow of liquefied gas and boil-off gas, and the dome may penetrate both the inner deck and the TD so that the top may be exposed to the outside.

An upper deck (UD) with a lower height than the TD may be provided on the left and right portions of the ED in the width direction. The UD may be a portion forming the ceiling of the passage way. The UD may set lower than the TD and may be connected to the TD through an inclined plane.

The UD is also exposed to the outside like the TD, and workers may move on the UD as well. In this case, handrails (not shown) and side lights, etc., may be provided at the left and right ends of the UD. The left and right ends of the UD are connected to the side of the hull, and the side of the hull is referred to as the side plating. As described above, a ballast tank 341 may be provided in the space between the side plating and the LT.

The UD may extend between the front end and rear end of the CA, but in the present embodiment, the UD may be converted into a lower deck (LD) at the front end of the CA. The LD is provided in parallel with the fore deck (FD), which will be described later, and may be a deck with a lower height compared to the UD.

The LD may be located on one side of the LT provided at the forefront among the plurality of LTs. The LD may be connected to the UD in the form of vertical or inclined steps at the front end, and this step portion may be provided on the portion where the LT is provided at the forefront in the anteroposterior direction within the CA.

As will be described later, the FD may implement mooring by installing mooring equipment 30. In particular, the FD may be prepared as a sunken deck. However, when mooring the ship 1, the use of the mooring line 301 is required not only in the bow and stern but also in the central portion of the hull. Therefore, the mooring line 301 may also be arranged in the CA. For this purpose, the LD is provided at the same height as the FD, so that integrated mooring may be achieved on the FD and the LD.

For example, mooring line 301 connected from the mooring equipment 30 (windlass, winch, etc.) provided on the FD may extend to the outside of the hull via the LD of the CA. In other words, the LD allows the mooring line 301 extending from the FD to extend to the left side or right side from the central portion of the hull.

In the case of a liquefied natural gas carrier, the ED is provided on both sides of the TD and may include an UD provided lower than the TD. The ED may vary depending on the type, structure, and shape of the LT. However, the ED is a part of the hull that is exposed to the outside and may be the upper surface that divides the interior and exterior of the hull.

The ED may be provided on the upper part of the cargo storage space 10 formed inside the hull, but the ED may not directly constitute the upper surface of the cargo storage space 10. In other words, the cargo storage space 10 and the ED are spaced apart in the vertical direction, forming a space that protects the cargo.

The ED may be equipped with equipment for unloading or loading cargo. In addition, the ED may be equipped with additional facilities for handling cargo. For example, if the cargo is liquefied natural gas, a manifold 12 for transport of the cargo may be provided on the ED. The manifold 12 is provided in the central portion of the hull to easily connect the ship 1 to the port transfer arm when the ship 1 is in contact with the port.

The manifold 12 is provided in a form that may transport both the gas phase and the liquid phase of the liquefied gas, and may have a shape in which gas phase lines and liquid phase lines are alternately provided. The manifold 12 may be provided with at least three lines in the anteroposterior direction, and a gas phase line and a liquid phase line may be configured in accordance with the arrangement of the transfer arm of the port.

The manifold 12 may be provided in a form extending from the TD toward both left and right ends. The manifold 12 may be bent downward on the outside of the TD in the width direction in order to have a height connected to the external transfer arm, and may extend in the horizontal direction on the UD. In other words, the manifold 12 may be bent at least twice and provided in the form of steps, and the step height of the bent portion of the manifold 12 may correspond to the height difference between the TD and the UD.

The manifold 12 may communicate with the LT and the transfer arm, and for this purpose, the manifold 12 may be connected to a liquefied gas line extending from the dome of the LT. The liquefied gas line extends from the dome in a forward or rearward direction. In the LT provided at the rear of the manifold 12 provided in the center portion of the hull, the liquefied gas line penetrates the dome and extends forward to connect to the manifold 12. On the other hand, in the LT provided fore of the manifold 12 provided in the center portion of the hull, the liquefied gas line may penetrate the dome and extend rearward to be connected to the manifold 12. In other words, the manifold 12 integrates and connects the plurality of LTs provided in the anteroposterior direction.

In addition, a vent mast 11 may be provided on the ED to discharge the liquefied gas released from the LT into the atmosphere. At least one vent mast 11 may be assigned to each LT. A total of four LTs are provided in the CA of the present embodiment, and a total of four vent masts 11 may also be provided.

When two LTs are provided aft and fore of the manifold 12, two vent masts 11 may be provided aft and fore of the manifold 12, respectively. The vent mast 11 may be provided in the central portion of the TD in the width direction, and may have a height above a certain level to protect workers located on the TD. In other words, so that the liquefied gas discharged from the vent mast 11 does not threaten workers, the vent mast 11 has a shape that releases the liquefied gas at a certain height or higher.

The vent mast 11 may release liquefied gas to the outside when the safety valve is opened when the internal pressure of the LT becomes excessive. Alternatively, the vent mast 11 may discharge the liquefied gas flowing between the LT and the manifold 12 to the outside as needed.

As will be described later, in the present embodiment, as both the height of the engine casing 40 and the height of the cabin 20 are lowered, the upper end of the vent mast 11 may be placed at the highest position. Taking advantage of this, at least one vent mast 11 may be provided with masthead lights 111, 261.

The masthead lights 111, 261 are provided at the front and rear of the ship 1 according to regulations, and the anteroposterior spacing between the fore masthead light 261 and the aft masthead light 111 shall exceed 100 m. In addition, the aft masthead light 111 shall be installed higher than the fore masthead light 261.

Considering this, in the present embodiment, for example, the aft masthead light 111 may be provided integrally with the vent mast 11 provided at the last end. In other words, in the present embodiment, instead of applying a separate structure for installing the masthead lights 111, 261 in the TD, the aft masthead light 111 may be installed on the vent mast 11 previously provided.

However, the vent mast 11 is a structure that emits liquefied gas, and the liquefied gas may be combustible and explosive. Therefore, the aft masthead light 111 provided on the vent mast 11 may have explosion-proof specifications.

As will be described later, the fore masthead light 261 may be installed on a radar mast 26. The radar mast 26 is mounted on a compass deck 21b in the cabin 20 provided in the FA. Since the radar mast 26 has a lower height than the vent mast 11, the aft masthead light 111 provided on the vent mast 11 may be provided higher than the fore masthead light 261 provided on the radar mast 26.

It is also possible to apply a separate mast to the cabin 20 for installing the fore masthead light 261. In this case, the fore masthead light 261 may be provided at the front or rear of the radar mast 26, and may be connected to the radar mast 26 as needed.

In addition, the aft masthead light 111 may also be installed by a separate mast other than the vent mast 11, and a mast supporting the aft masthead light 111 may be arranged around the vent mast 11. The aft masthead light 111 may be connected to the vent mast 11 to utilize the support structure of the vent mast 11.

When mounting the LT, a configuration responsible for processing such as re-liquefaction of liquefied gas and fuel supply needs to be provided. These configurations consist of a cargo handling room 41, and the cargo handling room 41 is provided on the deck.

The cargo handling room 41 may accommodate a compressor for compressing liquefied gas, a motor for operating the compressor, and a condenser or heater for cooling or heating the liquefied gas.

An engine casing 40 is provided on the AD, which divides the exterior and interior of the hull in the AA, which will be described later, and if an additional cabin 20 is provided on an aft deck (AD), the space in the AA is not sufficient, so the cargo handling room 41 may be arranged on the ED of the CA.

However, in the present disclosure, the cabin 20 is arranged in the FA rather than the AA. This will be explained in detail below. Through these features, the present disclosure secures free space where the cargo handling room 41 may be placed on the AD.

Therefore, the cargo handling room 41 is provided in the AA, not the cargo area CA. In other words, only the vent mast 11, manifold 12 and other facilities are provided on the TD, and the cargo handling room 41 for mainly processing liquefied gas is not located on the TD.

In this case, the present disclosure may secure sufficient free space on the TD. In particular, the present disclosure makes monitoring of the CA very easy because there is no room of a hexahedral structure with a specific height on the ED of the CA.

Furthermore, the present disclosure may allow installation of additional equipment, etc., on the ED of the CA. For example, auxiliary propulsion equipment using wind power may be provided on the ED of the CA. Wind auxiliary propulsion equipment may include Magnus rotor and wing sail. Such wind auxiliary propulsion facilities may be provided on at least one of the front and rear sides of the manifold 12, and may be arranged on the TD or UD.

Alternatively, facilities that utilize eco-friendly energy other than wind power, such as solar power generation equipment, may be installed on the ED of the CA. In addition, various equipment that may increase the operating efficiency of the ship 1 may be added to the CA.

However, in the present disclosure, among the residence room 22 and the steering house 21 included in the cabin 20, there may be an embodiment in which only the steering house 21 is arranged in the FA and the residence room 22 is maintained in the AA. In this case, the cargo handling room 41 may be provided on the ED of the CA. Alternatively, in this case, the cargo handling room 41 may be provided on the AD, and the cargo handling room 41 and the residence room 22 may overlap vertically.

The FA is provided fore of the CA. The FA may include the toward portion of the hull and encompasses the forward portion based on the operating direction of the ship 1. In the FA, the hull has a shape where the width narrows sharply the farther forward. Therefore, unlike the CA, the FA has relatively narrow space inside and outside the hull.

A bulbous bow may be provided at the front surface of the hull in the FA. In addition, the front surface of the hull is the bow facing the waves, and its shape may determine the resistance according to the ship speed. The upper part of the bulbous bow at the front surface of the hull may have a receding shape from the top to the bottom. Alternatively, the front surface of the hull may have a vertical shape.

The FA may be provided with the FD that separates the inside and outside of the hull. In particular, in the present disclosure, the cabin 20 is provided on the FD. At this time, the cabin 20 may include a steering house 21, and includes a residence room 22 along with the steering house 21.

At this time, the steering house 21 may be a space equipped with equipment to control the operation of the ship 1. However, when autonomous operation is applied to the ship 1 of the present disclosure, the equipment arranged inside the steering house 21 and the size of the steering house 21 may be changed.

The residence room 22 may be a space where workers (crew members) who perform various tasks within the ship 1 reside. The residence room 22 includes not only the space where the workers live, but also the space where the workers rest, work, or eat. In other words, the residence room 22 may be configured to include all spaces where workers may stay in addition to the steering house 21. When autonomous operation is applied to the ship 1 of the present disclosure, the residence room 22 may be minimized or omitted.

In the case of conventional liquefied natural gas carriers, cabins 20, such as a steering house 21, were generally provided at the stern. However, unlike the prior art, the present disclosure may increase space utilization of the AA and CA by arranging the cabin 20 on the FD in the FA.

In addition, since the cabin 20 is arranged in the FA, there is no blind spot due to the hull when looking forward from the steering house 21. In the conventional case where the cabin 20 is provided at the stern, a blind spot occurs due to the length of the hull in front of the cabin 20, resulting in a risk of accident. On the other hand, the present disclosure provides the cabin 20 on the FD so that there is (almost) no part obscured by the hull when looking forward from the steering house 21 of the cabin 20 (the slope of the visibility line is improved to be significantly lowered), thereby minimizing the risk of collision during operation.

As described above, in the case that the cabin 20 is provided at the stern, the cargo handling room 41 must be arranged in the CA, but in the present disclosure, since the cabin 20 is arranged at the bow, the cargo handling room 41 may be arranged in the AA. Therefore, since the cargo handling room 41 is not arranged in the CA, the worker's work efficiency and ease of work management are increased. Furthermore, the present disclosure enables environmentally friendly modifications to the CA.

The FD, like the shape of the hull, has a shape that becomes narrower the farther forward, and may have a convex curved shape the farther forward. Furthermore, mooring equipment 30 must be provided on the FD for mooring the ship 1, and mooring space must be secured. Therefore, the FD does not have sufficient floor space to arrange the cabin 20 such as the steering house 21 and the residence room 22.

When it is desired to arrange the cabin 20 on the FD, which has insufficient free space, there is a way to secure the required area of the cabin 20 by increasing the number of floors of the cabin 20. However, in this case, there is a problem that the air resistance due to the cabin 20 is significant.

Therefore, the present disclosure proposes a method to minimize air resistance due to the cabin 20 arranged in the FA, while ensuring the required area of the cabin 20 and securing sufficient mooring space.

Specifically, in the present disclosure, the cabin 20 is provided at the upper part of the FD and has a flat cross-section in which the width of the cabin 20 decreases forward toward the bow. At this time, the cabin 20 may have a shape where the extent to which the width of the cabin 20 decreases forward toward the bow is non-linear, so that the front of the cabin 20 may form a curved shape, or the cabin 20 may have a shape where the width of the cabin 20 decreases like a step forward toward the bow. Alternatively, the width of the cabin 20 may linearly decreases the farther forward to the bow, but the slope of the decrease in width varies at certain portions, forming a polygonal shape.

In other words, the cabin 20 of the present disclosure deviates from the rectangular shape provided at the stern and may be provided as a bullet type by having a flat cross-section similar to the FD. Through this, the present disclosure may minimize air resistance caused by the cabin 20.

In addition, in order to further reduce air resistance, the cabin 20 may have a shape in which the lower part forming the residence room 22 has a smaller flat cross-section from the lower surface (deck A) the farther upward. Therefore, the cabin 20 may form a '>' shape together with the upper part of the bow of the hull when viewed from the side.

The cabin 20 includes a steering house 21 and a residence room 22, and the residence room 22 is arranged in the lower part of the steering house 21. Based on the steering house 21, the floor may be defined as the steering deck 21a and the ceiling may be defined as the compass deck 21b, and the residence room 22 may be arranged in the lower part of the steering deck 21a. The compass deck 21b forms the upper surface of the cabin 20 and may be exposed to the outside. Some residence space may be formed in the upper part of the steering deck 21a. In other words, the function/use of the steering house 21 and the residence room 22 is not necessarily limited depending on the terms.

The residence room 22 of the cabin 20 may include deck A to deck B, etc., depending on the number of floors. At this time, the size of deck B is formed relatively small compared to deck A. In addition, the steering deck 21a may have a smaller size than the deck of the residence room 22. The cabin 20 may have a shape in which the lower part of the cabin 20 forming the residence room 22 has a flat cross-section that decreases upward while the upper part of the cabin 20 forming the steering house 21 has a flat cross-section that increases upward, conversely. In other words, the front end of the cabin 20 may form a '<' shape when viewed from the side.

Moreover, the cabin 20 may have a shape in which the upper part, which forms the steering house 21, is receded compared to the lower part, which forms the residence room 22. In other words, in the cabin 20, the lower part forming the residence room 22 and the upper part forming the steering house 21 are connected vertically with a step based on the steering deck 21a. In this case, at least a portion of the circumference of the steering deck 21a is exposed to the outside. At this time, the downward looking angle from the steering house 21 may be partially limited by the steering deck 21a forming the upper surface of the residence room 22, since the cabin 20 is arranged on the FD, even if the downward direction of the visibility line is partially limited by the steering deck 21a, blind spots may be innovatively eliminated compared to the prior art.

In addition, the steering house 21 may be protected by the residence room 22 protruding farther forward. For example, if there is green water coming over the FD during operation, the waves may be broken by the residence room 22 and may not hit the steering house 21. In particular, the lower part of the cabin 20 has a forward convex shape, and the front surface of the cabin 20 may perform the function of dividing green water like the bow of the hull.

However, at least the front surface of the lower part of the cabin 20 may be strengthened in structure and material compared to the upper part of the cabin 20 in preparation for impact with green water. For example, the window provided at the front surface of the lower part of the cabin 20 may be made of tempered glass, which has a higher strength than that used for the window of the steering house 21, and the thickness of the metal structure forming the front of the lower part of the cabin 20 may be relatively larger than the thickness of the metal structure forming the front of the upper part of the cabin 20.

When the steering house 21, which is the upper part of the cabin 20, is receded compared to the residence room 22, which is the lower part of the cabin 20, the steering deck 21a exposed to the outside may be connected to a wing bridge 24. Therefore, workers in the steering house 21 move to the wing bridge 24 via the steering deck 21a. For this purpose, the steering deck 21a may be provided parallel to the upper surface of the wing bridge 24. In addition, escape equipment (life boat, etc., not shown) may be provided on both sides of the cabin 20 for workers to escape, and the steering deck 21a exposed to the outside may enable access to the escape equipment.

When viewed from the side, the lower part of the residence room 22 may be inclined so that the front end recedes the farther upward from the lower end, while the upper part forming the steering house 21 may have an incline opposite thereto. In other words, the upper part forming the steering house 21 in the cabin 20 may be inclined so that the front end precedes the farther upward from the lower end when viewed from the side.

Nevertheless, the forefront end of the steering house 21 may be located rearward than the forefront end of the residence room 22. In other words, in the cabin 20, the anteroposterior step difference between the upper part forming the steering house 21 and the lower part forming the residence room 22 may be greater than the anteroposterior length at which the front end of the steering house 21 is inclined.

Such cabin 20 may have a lower end area that projects over 70% of the FD. Therefore, the present disclosure may secure the required area of the cabin 20 even though the area of the FD is relatively small.

However, if the cabin 20 covers most of the FD, securing mooring space becomes a problem. For this purpose, the cabin 20 is installed to be spaced upward relative to the FD. In other words, the cabin 20 has a structure where the lower surface is spaced upward from the FD through the support 23, and may form a piloti structure.

The certain height at which the lower surface of the cabin 20 is spaced upward from the FD is determined in consideration of the size of the mooring equipment 30 and the height required for maintenance of the mooring equipment 30. For example, the certain height may be 4.7m or more.

The support 23 may be provided so as not to interfere with the use of the mooring equipment 30. In other words, the support 23 may ensure that the space between the lower surface of the cabin 20 and the FD is as open as possible. For example, the support 23 may be provided fore of the cabin 20.

Since the cabin 20 is provided in a form that covers most of the FD, the support 23 may vertically connect the front end of the FD and the front end of the cabin 20. In particular, the support 23 may support the cabin 20 using a bulwark 28 provided on the circumference of the FD.

The bulwark 28 may be provided fore of the FD in the FA. The bulwark 28 is provided to surround the front of the FD and has a flat cross-section in a curved shape that is convex toward the front in correspondence to the shape of the FD. The bulwark 28 prevents green water from flowing into the FD when the ship 1 is in operation. In addition, the bulwark 28 may have a structure through which the mooring line 301 passes.

This bulwark 28 may be formed in a portion of the front part of the FD, and the support 23 has a lower end provided on the bulwark 28 and an upper end connected to the lower end of the cabin 20. Since the lower part of the cabin 20 forms the residence room 22, the upper end of the support 23 may be provided to support the lower surface of the residence room 22. In particular, the supports 23 may be provided in pairs so as to extend from both ends of the curved bulwark 28 to the lower surface of the cabin 20.

Since the lower surface of the cabin 20 is formed smaller than the area of the FD, and the circumference of the lower surface of the cabin 20 may be receded from the circumference of the FD, the support 23 connecting the bulwark 28 and the cabin 20 may have a shape where the upper end is inclined backward compared to the lower end when viewed from a plan view.

In addition, the support 23 may have a shape in which the upper end is inclined backward compared to the lower end when viewed from the side, and through this, the present disclosure may prevent the lower part of the support 23 from blocking the view for mooring.

Therefore, when the worker uses the mooring equipment 30 placed on the FD, the space on the FD is covered above by the cabin 20, and the surrounding area is open except for the support 23. Through this, the present disclosure may reduce air resistance due to the cabin 20 and ensure the efficiency of mooring operations while arranging the cabin 20 of a sufficient size on the FD.

The pair of supports 23 forms a bow opening (not shown) surrounded by the lower surface of the cabin 20 and the FD, and the mooring line 301 of the mooring equipment 30 passes through the bow opening. The bow opening has a size and shape that are as open as possible through the arrangement and shape of the support 23, thereby enabling easy mooring of workers.

Furthermore, the present disclosure may further reduce air resistance by lowering the maximum height of the cabin 20. The height of the cabin 20 may be minimized by making the flat cross-section of the cabin 20 itself a size and shape that covers most of the FD, and additionally, the FA may achieve the effect of lowering the upper end of the cabin 20 (compass deck 21b) by lowering the FD itself.

The FD has a relatively lower height than the ED formed in the CA. At this time, the ED includes the TD and UD as described above. In other words, the FD may be lower than the TD and may also be lower than the UD. Looking at this in FIG. 7, when the height of the TD is H0 and the height of the UD is H1, which is lower than H0, the height of the FD is H2.

Therefore, the height difference (HO-H2) between the FD and the TD may be greater than the height difference (H0-H1) between the UD and the TD. However, the height difference (H1-H2) between the FD and the UD may be smaller than the height difference (H0-H2) between the TD and the FD.

In other words, the FA may accommodate the height of the cabin 20 as much as the height (H1-H2) lowered by the FD from the UD. Since the lower surface of the cabin 20 is spaced upward from the FD only by the height necessary for the use of the mooring equipment 30, the upper surface of the cabin 20 may be lowered when the FD itself is lowered.

In this case, the cabin 20 may have a shape in which the height (height difference (H3-H0) between compass deck 21b and TD) protruding upward from the ED (TD) is smaller than the height difference (H0-H2) between the ED and the FD. In particular, since the TD may be placed on the same plane as the steering deck 21a provided in the cabin 20, the height (H3-H0) from the steering deck 21a upward to the compass deck 21b may be smaller than the height (H0-H2) from the steering deck 21a downward to the FD in the cabin 20.

Furthermore, the cabin 20 may be provided in a form that the height of the upper part is relatively low compared to the lower part with respect to the steering deck 21a. In other words, the height (H3-H0) from the ED to the compass deck 21b of the cabin 20 when the height of the compass deck 21b is H3, may be relatively smaller than the height (H0-H4) from the ED to the lower surface of the cabin 20 when the height of the lower surface of the cabin 20 is H4

In this case, the FD is a deck lower than the UD, and mooring equipment 30 is provided to form a sunken deck that implements mooring. The FD may be provided lower than the AD of the AA, which will be described later.

In other words, the FD, which forms the upper surface of the hull at the FA, is formed lower than the ED (UD), which is the lowest height forming the upper surface of the hull in the CA, and the AD, which forms the upper surface of the hull in the AA.

However, this FD does not have a step between the CA and the FA with the ED of the CA, but is continuously connected to a portion of the ED of the CA. As described above, in the CA, the LD is provided at the front end of the UD, and the LD may be stepped from the UD to have a height (H1) parallel to the FD. Therefore, the FD and LD may form a same plane between the FA and CA.

It was previously described that the reason why the FD does not form a step with the CA at the boundary between the CA and the FA, but extends without a step to a portion of the CA and then forms a step at a certain point, is that the mooring line 301 of the mooring equipment 30 provided on the FD must be extended through the CA.

The height difference (H1-H2) between the FD and the UD, i.e., the height difference (H1-H2) between the LD and the UD, may be around 2m. However, if the lowering of the FD is excessive, the area of the FD itself becomes narrow considering the bow alignment of the hull, causing restrictions not only on the installation of the cabin 20 but also on the installation of the mooring equipment 30. Therefore, the FD may be lowered to a height of less than 4m compared to the UD.

In this way, the FA not only achieves the effect of reducing air resistance by the cabin 20 having a flat cross-section that is convex toward the fore and a side cross-section that recedes upward from the lower end, but may further reduce resistance by lowering the maximum height of the cabin 20.

In this case, deck A and deck B of the residence room 22 in the cabin 20 may be provided lower than the TD. In addition, the steering deck 21a formed on the upper part of deck B in the cabin 20 may be provided at the same or similar height as the TD, and the compass deck 21b of the cabin 20 may be provided above the TD.

Thus, the cabin 20 is provided with two decks below and one deck above the TD, so that the part higher than the TD has a relatively lower height than the part lower than the TD. Accordingly, the ship 1 may greatly reduce air resistance by arranging the cabin 20 on the FD of a relatively small area and minimizing the height of the cabin 20.

The cabin 20 may be provided so that the steering deck 21a has a height (H0) parallel to the TD among the ED of the CA. At least a portion of the steering deck 21a may be exposed to the outside, and the externally exposed steering deck 21a and the TD may be placed on the same plane. In addition, the steering deck 21a and the TD may be connected to each other to facilitate the passage of workers.

Workers working in the steering house 21 may be required to monitor the CA as needed. For this purpose, a cargo management room (not shown) may be provided behind the steering house 21 in the cabin 20. The cargo management room is provided to face the CA, ensuring visibility into the CA. In other words, the cargo management room may have a structure that is open toward the CA and allows movement to the CA. Alternatively, the cargo management room may be structured to have a window on the CA side so that the CA may be visually checked.

As described above, as the cargo handling room 41 is provided in the AA, there may be no elements in the CA that significantly obstruct visibility other than the vent mast 11 and the manifold 12. Therefore, workers may easily perform management for the entire CA while looking backwards from the cargo management room.

The cargo management room is provided at the same height as the steering house 21, so that the steering deck 21a may form the floor of the cargo management room. The cargo management room may therefore be connected to the ED of the CA without height difference.

The ship 1 of the present disclosure may be provided with a cargo handling room 41 in the AA, and the upper surface of the cargo handling room 41 may be provided at the same height as the ED of the CA. In this case, the ship 1 may form a same plane from the steering deck 21a of the FA to the ED of the CA and the upper surface of the cargo handling room 41.

At least some space of the residence room 22 provided in the cabin 20 may be a space where workers reside and sleep. In this case, lighting is required in the space to ensure the basic standard of living for workers. If the space is provided fore of the cabin 20 in the lower part, there is no problem with lighting, but there is a risk due to waves or external collisions. Therefore, the space may be provided aft of the cabin 20 in the lower part and may be located rearward of an impact protection bulkhead 31.

However, when the steering deck 21a is parallel to the TD in the cabin 20, since the lower part of the cabin 20 may be provided below the TD, lighting to the residence space provided aft of the cabin 20 in the lower part is limited. Accordingly, the cabin 20 may be arranged to be spaced forward from the ED of the CA in the anteroposterior direction, and lighting into the living space may be provided through the spaced gap.

However, the cabin 20 may be connected to the ED of the CA through a bracket 211. The bracket 211 may connect the ED and the cabin 20 without interfering with the lighting of the residential quarters of the cabin 20.

For example, the bracket 211 connects the TD and the rear surface of the cabin 20 anteroposteriorly, and may be provided as a pair to connect from both sides of the TD to both left and right ends of the rear surface of the cabin 20. In other words, since the pair of brackets 211 may form an empty space in the width direction, lighting may be achieved through between the pair of brackets 211.

In the bracket 211, the upper part may form at least a triangular shape to connect the TD and the rear surface of the cabin 20. In other words, the upper end of the bracket 211 may have a height that increases from the rear end to the front end, and in consideration of air resistance, etc., the upper end of the bracket 211 may have a concave shape.

The bracket 211 may be fixed to the front surface of the CA. Since the TD of the CA protrudes upward compared to the UD and FD, at the front surface of the CA vertically connecting the front end of the TD, brackets 211 are fixed to both ends in the horizontal direction.

In this case, the bracket 211 may be provided to cover at least part of the gap in the anteroposterior direction between the CA and the cabin 20. As previously described, the cabin 20 may be spaced forward from the ED of the CA for lighting purposes, and when a gap is formed between the CA and the cabin 20 in the anteroposterior direction, wind flows into the gap and wind resistance occurs. The bracket 211 may partially perform the function of a gap protector to reduce wind resistance.

However, since the horizontal width of the front surface of the CA where the bracket 211 is connected may be larger than the left and right widths of the cabin 20, the bracket 211 may have a shape inclined toward the center from the rear end to the front end. Alternatively, the portion of the bracket 211 extending forward from the front surface of the CA may not extend to the cabin 20.

The bracket 211 may extend forward along the circumference of the front surface of the CA and may have an optimal shape considering structural strength, etc. In addition, the bracket 211 may be fixed to the FD. In other words, the bracket 211, which is provided as a pair, may connect both left and right ends of the rear surface of the cabin 20 to the TD and the FD. Therefore, the rear surface of the residence room 22 is still exposed to the outside between the pair of brackets 211 and gets lighting.

The lower part of the bracket 211 fixed to the FD may be provided to be inclined toward the center from the rear end to the front end, and the slope of the lower part of the bracket 211 may correspond to the slope of the FD. In other words, the lower part of the bracket 211 may be provided to be inclined so as not to hinder workers from moving from the FD to the UD.

The bracket 211 extends from both ends at the front surface of the CA, to not only close the gap between the CA and the cabin 20, but also connect the ED of the CA to the cabin 20 to reinforce longitudinal strength. It was previously described that a longitudinal strength member may be provided in the longitudinal direction between the TD and the inner deck, and when the cabin 20 is spaced forward in the CA, the longitudinal strength member has a length up to the front end of the CA.

At this time, the bracket 211 integrates the ED of the CA with the rear surface of the cabin 20, so that the cabin 20 itself may serve as a structure that extends the longitudinal strength member farther forward. In other words, the cabin 20 in the FA also acts as a longitudinal strength member and may suppress the hull from being deformed into a concave or convex shape.

However, since the bracket 211 extends from both ends at the front surface of the CA, the longitudinal strength member and the cabin 20 may be connected somewhat misaligned in the horizontal direction, and as long as the lighting is not excessively reduced, the bracket 211 may also be added to the central portion of the front surface of the CA. In this case, the bracket 211 is provided parallel to the longitudinal strength member in the horizontal direction, so that the cabin 20 and the longitudinal strength member may be effectively connected.

As the bracket 211 connects and supports the rear of the cabin 20 to the ED, the bracket 211 allows the CA to function as a structure that supports the load of the cabin 20. In addition, since the support 23 described above is connected to the bulwark 28 at the front of the cabin 20 to support the load of the cabin 20, the cabin 20 is supported on the FD by the support 23 and supported on the ED by the bracket 211.

Thus, the FA may minimize or omit a separate support structure that vertically supports the cabin 20 on the FD. However, at least one duct structure that also serves as a support function may be applied to the FA, and at this time, the duct structure connects the cabin 20 with the interior of the hull, which will be described later, and may enable the transmission of power and various fluids (fresh water, sewage, etc.).

The wing bridge 24 may be provided in the cabin 20. The wing bridge 24 is a structure to check whether there are any problems at both ends of the hull when docking the ship 1, and the left and right widths of the wing bridge 24 may correspond to the maximum width of the ship 1. Considering that the width of the hull is maximum in the CA, the wing bridges 24 extend on both sides of the cabin 20 to correspond to the width of the hull in the CA.

Since the cabin 20 has a convex shape toward the fore, with the width decreasing forward toward the bow, in order to reduce the protruding length of the wing bridge 24, the wing bridge 24 may be provided relatively aft of the cabin 20. For example, the wing bridge 24 may be connected aft of the externally exposed portion of the steering deck 21a.

The wing bridge 24 is provided in a form that allows the worker to move, and the upper surface of the wing bridge 24 may form a same plane with the steering deck 21a so that workers working in the steering house 21 may move to the wing bridge 24. Therefore, the worker located in the steering house 21 may move to the upper surface of the wing bridge 24 via the steering deck 21a, and the worker located in the residence room 22 may move from the residence room 22 to the steering deck 21a and then access the upper surface of the wing bridge 24.

The upper surface of the wing bridge 24 may be surrounded by a handrail (not shown) to protect workers. In addition, equipment (cameras, sensors, lights, etc.) to assist the berthing of the ship 1 may be added to the wing bridge 24.

As autonomous operation technology is incorporated into the ship 1 of the present disclosure, when the ship 1 implements automatic berthing, the wing bridge 24 may be deleted. In other words, since the wing bridge 24 is a structure that allows workers to visually check the berthing state when berthing the ship 1, in the case of the ship 1 that may berth without confirmation from the worker, the wing bridge 24 may be omitted.

In addition, if the cabin 20 has a shape similar to the FD and has a flat cross-section whose maximum width corresponds to the maximum width of the ship 1, the wing bridge 24 may not be present. In this case, at least a portion of the steering deck 21a may function as the wing bridge 24.

Escape equipment is provided on the steering deck 21a connected to the upper surface of the wing bridge 24, and the escape equipment may be easily accessed from the wing bridge 24 and the steering deck 21a. Escape equipment may be provided aft of the wing bridge 24, and a pair of escape equipment may be provided on the left and right sides of the cabin 20.

The wing bridge 24 may extend in the horizontal direction from both sides of the cabin 20 in the form of wings, and the wing bridge 24 is integrated into the cabin 20 without a separate support structure, and its load may be supported by the cabin 20. Alternatively, the wing bridge 24 may be provided with an inclined reinforcement bar on its lower surface, so that the load may be supported by the cabin 20.

The wing bridge 24 has a fore edge facing fore and an aft edge facing aft, with at least the aft edge being able to be provided parallel to the width direction of the hull. At least part of the fore edge may also be provided parallel to the width direction of the hull, but both left and right ends of the fore edge may have a slope that recedes toward the ends. In other words, the wing bridge 24 may have a relatively rectangular parallelepiped shape when viewed in plan, and may have a chamfer shape in which both ends of the fore edge are shaved.

As described above, the cabin 20 is supported on the FD by the support 23, bracket 211, etc., so that the lower surface of the cabin 20 is spaced upward, and mooring equipment 30 is provided below the cabin 20 on the FD. In this case, mooring work using the mooring equipment 30 may be performed between the FD and the lower surface of the cabin 20.

In addition, maintenance and repair work on the mooring equipment 30 must also be performed between the FD and the lower surface of the cabin 20. In particular, for installation and unloading of the mooring equipment 30, the height between the FD and the lower surface of the cabin 20 may have more clearance than the height of the mooring equipment 30.

Furthermore, the cabin 20 may be provided with unloading equipment 25 for maintenance of the mooring equipment 30. The unloading equipment 25 may be fixed to the FD or the lower surface of the cabin 20, and for example, is provided to correspond to the installation location of the mooring equipment 30 on the lower surface of the cabin 20, so that it does not interfere with the movement of workers on the FD.

The unloading equipment 25 may be a crane, davit, etc., and may lift the mooring equipment 30 and remove it to the outside of the FD, or receive the mooring equipment 30 from the outside and deliver it to a specific location on the FD. For this purpose, a plurality of unloading equipment 25 may be fixedly installed on the lower surface of the cabin 20. Alternatively, the unloading equipment 25 may be provided to be movable within a certain space on the lower surface of the cabin 20, and rails, etc., may be used.

The deck that separates the exterior and interior of the hull, such as the FD in the FA or the ED of the CA, may have a slope that decreases from the center to both left and right ends. In other words, camber is applied to the deck of the hull.

In this case, looking at the FA, the shortest height from the FD to the lower surface of the cabin 20 is formed at the center portion in the horizontal direction on the FD. On the other hand, the height between the FD and the lower surface of the cabin 20 gradually expands from the FD to both left and right ends.

The unloading equipment 25 may be provided in the central portion in the horizontal direction from the lower surface of the cabin 20, and when the mooring equipment 30 is lifted by the unloading equipment 25 and then pulled out in the horizontal direction, a sufficient margin may be secured.

The unloading equipment 25 may be provided on both left and right ends of the lower surface of the cabin 20. In this case, through the camber shape of the FD, it is possible to secure not only the installation height of the unloading equipment 25 but also the height of the unloading space.

The upper part of the cabin 20 forms the steering house 21, and the ceiling of the steering house 21 forms the compass deck 21b. A radar mast 26 is provided on the compass deck 21b to ensure operational safety of the ship 1. The radar mast 26 detects using radar with respect to the front of the direction in which the ship 1 is operating.

In order to secure detection performance, the radar mast 26 may be provided in the form of a pillar with a certain height relative to the compass deck 21b. In addition, the radar mast 26 may be provided in the central portion of the compass deck 21b in the horizontal direction, and may be arranged biased toward the front in the anteroposterior direction.

Masthead lights 111, 261 may be added to the radar mast 26. As previously described in the vent mast 11 of the CA, the ship 1 is provided with masthead lights 111, 261, and the masthead lights 111, 261 are provided at the front and rear, respectively, and the fore masthead light 261 and the aft masthead light 111 are preferably spaced apart from each other by a certain distance (for example, 100 m) or more. In addition, the fore masthead light 261 must be provided lower than the aft masthead light 111.

Considering these requirements, the radar mast 26 may be provided with a fore masthead light 261 integrally. In the present disclosure, the FD is provided lower than the UD to form a sunken deck, and the cabin 20 has a relatively wide flat cross-section to cover most of the FD, and the compass deck 21b of the cabin 20 is provided so as not to be excessively higher than the TD. For example, since the compass deck 21b is provided at a height lower than the height between the TD and the lower surface of the cabin 20, based on the TD, even if the radar mast 26 is installed on the compass deck 21b of the cabin 20, the upper end height (H5) of the radar mast 26 may be formed lower than the upper end height (H6) of the vent mast 11 described above.

However, since the compass deck 21b where the radar mast 26 is installed is provided higher than the TD, which is the ED where the vent mast 11 is installed, the height (H5) of the radar mast 26 may have a lower value than the height (H6) of the vent mast 11. In this case, the height difference (H6-H5) between the radar mast 26 and the vent mast 11 may be greater than the height difference (H3-H0) between the compass deck 21b and the TD. This is to secure the height difference between the fore masthead light 261 and the aft masthead light 111.

Thus, the fore masthead light 261 installed on the radar mast 26 is located at a lower height (H5) than the aft masthead light 111 installed on the vent mast 11 located a certain distance or more rearward from the radar mast 26. In addition, the radar mast 26 and the vent mast 11 may be provided side by side in theanteroposterior direction. The radar mast 26 is arranged at the central portion of the compass deck 21b in the horizontal direction direction, and the vent mast 11 is also arranged at the central portion of the TD in the horizontal direction. Therefore, the fore masthead light 261 and the aft masthead light 111 may display the approximate length of the hull while accurately indicating the longitudinal direction of the hull.

As the fore masthead light 261 and the aft masthead light 111 are installed on the radar mast 26 in the FA and the vent mast 11 of the CA, the present disclosure eliminates the need to arrange a pillar with a separate support structure for the installation of the masthead lights 111, 261, thereby further increasing space utilization on the deck.

In addition, as the cabin 20 is located in the FA and the radar mast 26 is provided on the compass deck 21b of the cabin 20, compared to the case where the cabin 20 is located at the stern, the radar mast 26 may omit detection of the CA. Through this, the radar mast 26 is not affected by the CA when detecting the front with radar, thereby improving operational stability.

In the case of the aft masthead light 111 provided on the vent mast 11, it may be provided to have explosion-proof specifications in consideration of the discharge of explosive substances such as liquefied gas from the vent mast 11. However, in the case of the fore masthead light 261 provided on the radar mast 26, it is free from the risk of explosive cargo and may be provided to have non-explosion proof specifications.

To the compass deck 21b where the radar mast 26 is provided, provision cranes or davits, etc., may be added to at least both sides. At this time, the provision crane may be provided to retrieve the escape equipment. Alternatively, the provision crane provided on the compass deck 21b may implement unloading of the mooring equipment 30. In other words, the mooring equipment 30 provided on the FD is moved to a position offset from the lower surface of the cabin 20 by the unloading equipment 25 installed on the lower surface of the cabin 20, and may then be delivered to the outside by the provision crane provided on the compass deck 21b. In other words, the provision crane on the compass deck 21b may assist the unloading equipment 25 provided on the lower surface of the cabin 20.

Alternatively, the unloading of the mooring equipment 30 is performed by the unloading equipment 25 on the lower surface of the cabin 20, and the provision crane provided on the compass deck 21b may be responsible for lifting other equipment in addition to the mooring equipment 30. In particular, the provision crane on the compass deck 21b may be provided to transport equipment installed inside the cabin 20.

For this purpose, a cabin hatch 27 may be provided on the compass deck 21b. The cabin hatch 27 may be provided in a form that may be opened and closed on the compass deck 21b, and may be arranged behind the radar mast 26. In addition, the cabin hatch 27 may be provided between a pair of provision cranes that may be arranged on the compass deck 21b.

The cabin hatch 27 may penetrate the compass deck 21b, and in the cabin 20, the steering deck 21a may be provided with a hatch (not shown) in a portion corresponding to the cabin hatch 27. Therefore, when the cabin hatch 27 on the compass deck 21b is opened and the hatch on the steering deck 21a is opened, the cabin 20 allows for the transport of equipment between the outside of the cabin 20 and the residence room 22 of the cabin 20 using the provision crane or other equipment provided on the compass deck 21b.

The cabin hatch 27 may be used to transport steering equipment used in the steering house 21 and various facilities or consumption items required for residence in the residence room 22, and may be maintained in a sealed state during operation.

As described above, mooring equipment 30 may be arranged on the FD, and the mooring equipment 30 is arranged between the FD and the lower surface of the cabin 20. The mooring equipment 30 may include a winch, windlass, mooring line 301, etc.

The mooring equipment 30 allows the mooring line 301 to extend in various directions in order to stably moor the ship 1. For example, the mooring line 301 may pass through the bulwark 28 and extend toward the front of the ship 1. In this case, the fore mooring line 301 penetrating the bulwark 28 extends to have an inclination of less than 45 degrees to the left or right with respect to the anteroposterior direction center line of the ship 1.

In addition, the mooring line 301 is provided to penetrate both ends of the bulwark 28 having a curved shape, and may extend parallel to the width direction of the ship 1. In addition, the mooring line 301 extends from the FD, changes the direction of extension through standing rollers or bollards provided on the FD or LD, and then extends to both left and right sides of the LD.

The mooring line 301 extends to both left and right in the CA to stably secure the hull. For this purpose, as described above, a certain fore portion of the ED of the CA is composed of an LD that is lower than the UD and is on the same plane as the FD, which is a sunken deck.

Hereinafter, the internal structure of the hull in the FA will be described. The interior of the hull, which is the lower part of the FD in the FA, may be divided into multiple spaces by bulkheads, etc. At this time, the bulkhead may include both a longitudinal bulkhead and a transverse bulkhead, and at least one transverse bulkhead may be formed as an impact protection bulkhead 31 to prepare for a fore collision of the hull.

The impact protection bulkhead 31 may be a transverse bulkhead provided at the forefront inside the hull, and may be provided vertically in the vertical direction to form a 'T' shape with the FD when viewed from the side. The impact protection bulkhead 31 is provided at a position retreated by a certain distance compared to the front surface of the hull. The impact protection bulkhead 31 is used to protect the inside of the hull when the ship 1 collides with an obstacle, and may be made of steel that is thicker than other surrounding parts.

A bosun store 32 may be provided inside the hull in the FA. The bosun store 32 may implement the role of a warehouse and may be formed directly below the FD. The bosun store 32 is provided aft of the impact protection bulkhead 31 and may form a ' 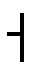 ' shaped structure, or the impact protection bulkhead 31 may extend downward from the lower part of the bosun store 32 to form a ' 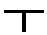 ' shaped structure.

An anchor chain used to moor the ship 1 may be stored on the left or right side of the bosun store 32. The anchor chain may be accommodated in a chain locker (not shown), and the chain locker may be composed of a space separated by a separate structure inside the bosun store 32. Alternatively, the chain locker may be formed outside the bosun store 32. However, the lower end of the chain locker extends lower than the lower surface of the bosun store 32, so the height of the chain locker may be formed higher than that of the bosun store 32.

A pump room 33, a tank room 34, etc., may be provided aft of the impact protection bulkhead 31. The pump room 33 may be provided in the lower part of the bosun store 32 aft of the impact protection bulkhead 31. The pump room 33 may accommodate a pump for transporting cargo or other fuel.

When the pump room 33 accommodates a pump that transports fuel, etc., the fuel transported by the pump may be the fuel stored in the tank room 34. At this time, the pump may include a fuel pump, and the fuel pump delivers fuel from the tank room 34 to the engine room 42, etc. Fuel transported by the fuel pump may be delivered to the AA via the passage way or pipe duct under the TD described above, and may be oil fuel.

The propulsion engine 421, power generation engine 422, etc., provided in the engine room 42 may be a type that mainly consumes liquefied gas, but the propulsion engine 421, etc., may consume oil fuel as needed. If the propulsion engine 421 needs to be operated with fuel other than cargo, the pump room 33 may deliver the fuel in the tank room 34 to the propulsion engine 421, etc.

As described above, in the present disclosure, the cabin 20 may be provided on the FD in the FA, and since waste is continuously generated in the cabin 20, a configuration for disposing of waste needs to be arranged around the cabin 20. Accordingly, a waste treatment unit 35 may be provided in the FA.

The waste treatment unit 35 may treat waste discharged from the cabin 20, especially urine or feces delivered from the residence room 22. The waste treatment unit 35 may be provided inside the hull in the FA, and waste is delivered from the residence room 22, which is the lower part of the cabin 20, to the waste treatment unit 35 provided below the FD.

In this case, waste must pass between the lower surface of the cabin 20 and the FD, and in this case, the duct structure described above may be used. In other words, a pipe through which waste flows may be formed within the duct structure, and waste generated in the residence room 22 may be delivered to the waste treatment unit 35 inside the hull through the FD.

The waste treatment unit 35 may treat waste using microorganisms, or may purify waste using various chemical reactions. The waste treatment unit 35 may purify and store at least some of the waste delivered from the residence room 22 and then deliver it to land when the ship 1 docks at a port, etc.

Alternatively, the waste treatment unit 35 may change the waste to a state that does not cause significant environmental pollution even if it is disposed of in the sea, and then discharge an appropriate amount into the sea during the operation of the ship 1.

The waste treatment unit 35 may be provided at the lower part of the bosun store 32, and to prevent harmful gases generated from the waste treatment unit 35 from interfering with work on the FD, the waste treatment unit 35 may be located at the lowest point inside the hull. In particular, the waste treatment unit 35 may be provided at the lower part of the pump room 33, and the waste treatment unit 35 may be accommodated in a space where the pump is arranged within the pump room 33, or the waste treatment unit 35 may be accommodated in an independent space structurally partitioned within the pump room 33.

Harmful gases generated from the waste treatment unit 35 are released into the atmosphere.

Instead of being provided at the bottom of the pump room 33, the waste treatment unit 35 may be provided within the tank room 34, which will be described later. In the present disclosure, as the cabin 20 is arranged in the FA, the load on the FA increases, and bow trim, which causes the bow to sink relative to the stern, may occur. In this case, the ballast tank 341 may be minimized or omitted in the front and/or FA of the CA.

Therefore, when the ballast tank 341 included in the tank room 34 is reduced in consideration of the bow trim, the waste treatment unit 35 may be arranged within the free space secured by the reduction of the ballast tank 341. The ballast tank 341 of the tank room 34 may be arranged on the left and right, and the waste treatment unit 35 may be provided between the ballast tank 341 and the pump room 33 in the anteroposterior direction.

Alternatively, when the ballast tank 341 is omitted from the tank room 34, the waste treatment unit 35 may be provided on at least one side of the left or right side of the fuel tank 342 included in the tank room 34. Alternatively, a ballast tank 341 may be provided on one of the left and right sides of the tank room 34 and a waste treatment unit 35 may be arranged on the other side.

During the operation of the ship 1, the cabin 20 continuously discharges waste and simultaneously receives and consumes a certain amount of power. Therefore, along with the treatment of waste discharged from the cabin 20, the supply of power to the cabin 20 is essential.

This power demand may generally be covered by generator 36. The generator 36 may include a power generation engine 422 provided in the engine room 42 of the AA. However, since the cabin 20 of the present disclosure is provided in the FA rather than the AA, in order to transmit power from the power generation engine 422 to the cabin 20, it is necessary to extend a (high-voltage) power cable from the engine room 42 in the AA to the cabin 20 of the FA. To improve this, the present disclosure allows the generator 36 to be arranged on the FA.

Specifically, the generator 36 may be provided inside the hull in the FA. The generator 36 may be arranged inside the pump room 33, etc., but the location of the generator 36 is not limited thereto. However, the generator 36 may be isolated from the cabin 20 by at least a double space, and may be arranged in a space separate from the tank room 34. In addition, the generator 36 is provided at the upper part of the pump room 33, so that workers may relatively easily access the generator 36 and perform maintenance on the generator 36.

The generator 36 provided inside the hull may use fuel of the tank room 34. In this case, the fuel line from the tank room 34 to the generator 36 may be provided with a relatively short length, and the fuel pump of the pump room 33 may be used to transfer the fuel in the tank room 34 to the generator 36. In addition, since only power cables need to be laid in an approximately vertical direction from the generator 36 to the cabin 20, the length of the power cable may be greatly shortened. At this time, the power cable may be accommodated in a duct structure provided between the lower surface of the cabin 20 and the FD.

In this way, in the present disclosure, in preparation for the cabin 20 being arranged in the FA rather than the AA, the generator 36 to cover the power load may be arranged inside the hull in the FA. At this time, the fuel stored in the tank room 34 provided in the FA is delivered to the generator 36 through a fuel pump present in the FA, so the configuration related to fuel supply may be compactized. In addition, in the above case, power only needs to be transmitted from the generator 36 in the FA to the cabin 20 on the FD, making installation and management of the power cable very easy.

The pump room 33 may accommodate seawater pumps in addition to the fuel pump. When the pump chamber 33 accommodates the seawater pump, the seawater pump may transport seawater flowing in from a sea chest (not shown) formed on the outer surface of the hull from the lower side of the pump room 33. The seawater pump may deliver seawater flowing in from the outside to the ballast tank 341 or discharge seawater stored in the ballast tank 341 to the outside.

The tank room 34 accommodates fuel, seawater, etc. The tank room 34 may accommodate a ballast tank 341 and a fuel tank 342. The ballast tank 341 may be used for ballasting of the ship 1 together with the ballast tank 341 provided in the CA.

However, as described above, in the present disclosure, considering that the cabin 20, which is a load body, is provided in the FA, the ballast tank 341 in the tank room 34 may be minimized or omitted. In addition, the waste treatment unit 35 or the generator 36 described above may be provided in the spare space secured as the ballast tank 341 is reduced or omitted in the tank room 34.

However, as will be described below, in the present disclosure, the cargo handling room 41 may be arranged to be retreated to the AA rather than the CA. Therefore, even if the cabin 20 is arranged in the FA rather than the AA, by arranging the cargo handling room 41 in the AA, bow trim due to the cabin 20 may be suppressed. In this case, ballast tanks 341 may be provided on both left and right sides of the tank room 34, and the waste treatment unit 35 and generator 36, etc., may be arranged in the pump room 33.

The fuel tank 342 may be provided side by side with the ballast tank 341 in the horizontal direction. The fuel tank 342 may store fuel to be used in the generator 36 or the engine room 42, etc. At this time, the fuel may be a substance other than liquefied gas stored in the CA, and may have a boiling point higher than room temperature. For example, the fuel may be oil fuel such as HFO, MGO, etc. Therefore, the fuel tank 342 may have a structure that isolates only a certain space without a separate insulation structure, but the fuel tank 342 may have a coating applied to the inner wall, etc., to prevent corrosion or other contamination.

The fuel tank 342 accommodated in the tank room 34 may also store liquefied gas similar to cargo, and in this case, insulation may be applied to the fuel tank 342. Alternatively, the fuel tank 342 may be an independent pressurized tank that is manufactured separately from the outside and then mounted inside the hull, storing fuel at high pressure.

The AA is provided aft of the cargo area CA. The AA may include the stern portion of the hull and encompasses the aft portion based on the operating direction of the ship 1. In the AA, the hull may have a shape where the width becomes somewhat narrower towards the rear, but it is also possible for the hull width to not become narrower.

However, even though the width of the hull in the AA becomes narrower toward the rear, the extent to which the width of the hull is reduced in the AA may be relatively small compared to the FA. Therefore, while the FA has a sharp front end, the AA may have a rear end cut in the width direction.

A propeller for propulsion is provided at the rear surface of the hull in the AA. In addition, a rudder may be provided at the rear of the propeller to control the operating direction of the ship 1. In addition, an energy saving device that may improve propulsion efficiency may be installed at the rear of the propeller or the front of the rudder.

The AA may be provided with an AD that divides the inside and outside of the hull. In addition, the height of the fore protion and aft portion of the AD may be different. The aft portion of the AD may be provided with mooring equipment 30 as described in the FD and form a sunken deck.

The aft portion of the AD may be at the same height as the FD or may be lower. In other words, the aft portion of the AD may be lower than the ED of the CA. In addition, this part may have a shape where the height decreases from the front end to the back end.

The fore portion of the AD, unlike the aft portion, may have a certain height and may have a higher height than the aft portion. Therefore, the AD may have a step in the height direction between the fore and aft.

The fore portion and the aft portion of the AD may be distinguished by the rear surface of the engine casing 40 provided on the AD. Hereinafter, for convenience of explanation, the AD may refer to the area from the AD to the fore portion, unless otherwise specified.

An engine casing 40 is mounted on the AD, and the rear surface of the engine casing 40 may be parallel to the rear end of the AD. The engine casing 40 is provided outside the hull and discharges exhaust from the engine room 42, which will be described later. The engine casing 40 is provided with a stack (not shown) at the center in the horizontal direction. The stack is a component that discharges exhaust from the engine room 42 and may be referred to as a funnel. The stack may accommodate an exhaust pipe 403 that discharges exhaust gas extending from the engine room 42. It is also possible for the stack to be provided in a location other than the center of the engine casing 40.

The stack discharges exhaust into the atmosphere above a certain height to protect workers located on the AD. Therefore, the exhaust discharged from the stack does not flow to the AD but may escape rearward as the ship 1 operates.

The engine casing 40 may have a shape in which the central stack protrudes upward. In this case, the engine casing 40 may have lower left and right portions compared to the central stack, so as to form an overall symmetrical step shape.

The engine casing 40 may be formed in the form of steps with both ends in the horizontal direction lower than the center, excluding the protruding portion of the stack. The engine casing 40 may have the stack protruding from the central portion in this step shape. In other words, the stack may be provided at a relatively high stage in the engine casing 40.

The reason why the stack is provided in the central portion of the engine casing 40 is because the propulsion engine 421, etc., provided in the engine room 42 is located in the central portion along the width direction of the ship 1. In other words, the stack of the engine casing 40 is provided so as not to deviate from the exhaust port of the propulsion engine 421 in the horizontal direction, so that the exhaust pipe 403, which delivers exhaust discharged from the propulsion engine 421, etc., to the engine casing 40, may extend upward without being bent to the left side or right side.

Considering the size and displacement of the propulsion engine 421, the exhaust pipe 403 of the propulsion engine 421 may cause excessive vibration and noise if there is a bent portion. Therefore, the stack of the engine casing 40 is provided at the same position in the horizontal direction as the propulsion engine 421, so that the bent portion in the exhaust pipe 403 may be minimized. In addition, the power generation engine 422 is also provided to overlap the propulsion engine 421 in the horizontal direction, so that the exhaust pipe 403 connected from the power generation engine 422 to the stack may also exclude bending in the horizontal direction.

The engine casing 40 may further include combustion equipment 401 in addition to the stack. The combustion equipment 401 burns fuel. At this time, the fuel burned by the combustion equipment 401 may be cargo, such as liquefied gas, or fuel stored in the tank room 34 of the FA described above.

The combustion equipment 401 may include a gas combustion unit that burns and consumes liquefied gas, which is a gas fuel. The gas combustion unit may be a concept encompassing a gas valve unit that supplies fuel to the propulsion engine 421 or the power generation engine 422. Alternatively, the combustion equipment 401 may include a burner that burns gas or oil fuel.

In addition, the combustion equipment 401 may include a boiler that burns fuel to generate steam, in addition to equipment that burns and consumes excess fuel. At this time, the exhaust generated from the combustion equipment 401 may also be delivered to the stack and then discharged into the atmosphere, like the exhaust from the propulsion engine 421.

Therefore, the exhaust pipe 403 that discharges the exhaust of the propulsion engine 421 and the exhaust pipe 403 that discharges the exhaust of the combustion equipment 401 are accommodated within the stack. In the stack, a plurality of exhaust pipes 403 may be fixed so as not to interfere with each other.

The stack may be provided at a relatively high stage of the engine casing 40, and the combustion equipment 401 may be provided at a relatively low stage of the engine casing 40. At this time, the combustion equipment 401 provided at the lower stage of the engine casing 40 may be a gas combustion unit or a boiler, and in particular, may be a gas combustion unit. When the gas combustion unit is provided at the lower stage of the engine casing 40, the exhaust port of the combustion equipment 401 may be provided separately from the stack on the upper surface of the engine casing 40. In other words, the engine casing 40 may be provided so that the exhaust port of the combustion equipment 401 is exposed to the outside on one side of the stack. For reference, the exhaust port of the combustion equipment 401 may also have a similar shape and function as the stack provided in the center of the engine casing 40, and may therefore be referred to as a stack.

In this case, the engine casing 40 discharges exhaust from the engine room 42 through the stack in the center portion, and exhaust from the combustion equipment 401 is discharged from the left or right portion. In other words, the engine casing 40 may have a structure in which at least two or more exhaust holes are formed. However, in order to prevent the exhaust from the stack from flowing back toward the combustion equipment 401 or, conversely, from the exhaust from the combustion equipment 401 from flowing back toward the stack, the two exhaust holes may be sufficiently spaced apart from each other. Therefore, the exhaust discharged from the engine casing 40 does not flow back into the engine casing 40 during the operation of the ship 1, but is naturally released into the atmosphere.

In the present disclosure, the engine casing 40 may be provided in a separate location from the stack, instead of integrating the exhaust port of the combustion equipment 401 into the stack. In this case, the maximum height of the stack provided in the center of the engine casing 40 may be adjusted downward to a height that does not include the exhaust port of the combustion equipment 401, so the overall height of the engine casing 40 may be significantly reduced.

As mentioned above, the engine casing 40 may have a shape in which the left and right portions of the engine casing 40 are lower than the central portion of the engine casing 40. In the engine casing 40, if the combustion equipment 401 is arranged in the center of the engine casing 40, the combustion equipment 401 is installed at the upper end of the engine casing 40 and protrudes higher than the stack to satisfy the exhaust port height condition. Therefore, the overall height of the engine casing 40 increases significantly.

On the other hand, in the present disclosure, the combustion equipment 401 is arranged at the lower stage of the engine casing 40, so that the maximum height of the engine casing 40 is not affected by the combustion equipment 401. Moreover, since the combustion equipment 401 is not accommodated within the stack, the height of the stack may be lowered to the minimum value that may protect workers located on the AD. Therefore, in this case, the height (of the central portion) of the engine casing 40 may be reduced to the extent that the stack, which is lower than before, protrudes at a high stage of the engine casing 40.

However, in order to provide the combustion equipment 401 on the left or right side of the engine casing 40, the fire extinguishing agent room 43 or the emergency power generation room, etc., which were conventionally accommodated in the engine casing 40, may be moved and arranged somewhere other than the engine casing 40. In other words, the fire extinguishing agent room 43, etc., which was provided at a low stage of the engine casing 40, is removed from the engine casing 40, and the combustion equipment 401 may be arranged in the spare space secured through this.

However, the engine casing 40 may be raised to a form that the lower stage where the combustion equipment 401 is provided covers the combustion equipment 401. In other words, the engine casing 40 may be made to have a shape that is lower than the central portion on either side of the left and right portions, and exhaust from the stack and combustion equipment 401 may be performed from the central portion and one side portion, respectively.

Among the components that configuring the combustion equipment 401, it may be desirable for the parts (fans, etc.) other than the exhaust port to be accommodated inside the engine casing 40, and the engine casing 40 of the present disclosure expands the internal volume of one side end by aligning any one side end of lower stages which are the left and right Iportions with the central higher stage. In particular, one side end whose height is expanded vertically may be the one side end where the fire extinguishing agent room 43 was conventionally mounted.

In other words, the engine casing 40 extends one side end of the left and right portions up vertically, and moves and arranges the fire extinguishing agent room 43 accommodated at one side end, so that the one side end of the engine casing 40 may sufficiently accommodate the portion of the combustion equipment 401 excluding the exhaust port. Therefore, in the engine casing 40, as the combustion equipment 401 is provided inside the engine casing 40 on one side outside the stack instead of being accommodated inside the stack, while the overall height of the engine casing 40 is reduced, the conditions necessary for installation of the combustion equipment 401 are satisfied, thereby ensuring the operation stability of the combustion equipment 401.

The engine casing 40 may include exhaust treatment equipment 402 that processes exhaust discharged from the engine room 42 in order to satisfy various environmental regulations applicable to the exhaust of the ship 1. The exhaust treatment equipment 402 purifies at least one of the exhaust of the engine room 42 and the exhaust of the combustion equipment 401, and may include selective catalytic reduction equipment that reduces pollutants contained in the exhaust. Alternatively, the exhaust treatment equipment 402 may further include a filter that removes particles contained in the exhaust, a scrubber that washes the exhaust with seawater, etc. Furthermore, the exhaust treatment equipment 402 may include exhaust recirculation equipment to improve the condition of exhaust gas to be discharged in the future, rather than equipment that directly purifies exhaust gas already discharged.

The engine casing 40 may discharge exhaust gas that has passed through exhaust treatment equipment 402, such as selective catalytic reduction equipment, through the stack. In other words, the exhaust treatment equipment 402 may be provided on the exhaust pipe 403 that delivers exhaust discharged from the engine room 42 to the stack, and may also be installed in the exhaust port of the combustion equipment 401. As described above, since the combustion equipment 401 may be provided separately from the stack, in the engine casing 40, a plurality of exhaust treatment equipment 402 may be allocated to the exhaust port of the combustion equipment 401 and the exhaust pipe 403 within the stack.

Alternatively, instead of the exhaust of the combustion equipment 401 being formed separate from the exhaust of the stack, the exhaust port of the combustion equipment 401 may be connected to the inside of the stack. In other words, although the combustion equipment 401 is provided separately from the stack, the exhaust port of the combustion equipment 401 is not exposed to the outside of the engine casing 40 and may be connected to the inside of the stack. In this case, the exhaust of the combustion equipment 401 and the exhaust of the engine room 42 delivered to the stack may be treated through the integrated exhaust treatment equipment 402 and then discharged to the outside. In other words, when the stack is provided to receive and discharge the exhaust of the combustion equipment 401, the exhaust from the engine room 42 may be discharged to the outside through the stack through the exhaust treatment equipment 402, and the exhaust from the combustion equipment 401 may be discharged to the outside through the exhaust treatment equipment 402 allocated to the stack.

A silencer 404 may be installed in the exhaust pipe 403. The silencer 404 may be provided on the exhaust pipe 403 provided vertically, and may be provided downstream of the exhaust treatment equipment 402 and/or downstream of the combustion equipment 401. The silencer 404 may have a form that reduces noise using a porous structure, and may also have a function of reducing low frequencies.

A cargo handling room 41 is provided fore of the engine casing 40 on the AD. The cargo handling room 41 is configured to process cargo stored in the CA, and configurations accommodated within the cargo handling room 41 may vary depending on the type of cargo.

The cargo handling room 41 may accommodate devices for loading or unloading cargo when the ship 1 docks at the port, and may accommodate devices for stably maintaining the loading state of cargo during the operation of the ship 1.

For example, if the cargo is liquefied gas, the cargo handling room 41 may accommodate devices for loading and unloading the liquefied gas. Specifically, the cargo handling room 41 may include a vaporizer necessary for preparing LT before loading the liquefied gas (drying, inerting, gassing up, cool down, etc.), and may include a compressor (HD compressor) for processing boil-off gas generated in the LT when loading the liquefied gas.

In addition, the cargo handling room 41 may include a heater, etc., necessary to prepare for entry into the LT after unloading of the liquefied gas (warming up, inerting, aerating, etc.).

In addition to including a device for loading and unloading liquefied gas, or for processing liquefied gas before loading or after unloading, the cargo handling room 41 also includes a device that ensures the storage stability of the LT during the process of operating liquefied gas. As an example, the cargo handling room 41 may include a re-liquefaction device that re-liquefies the boil-off gas generated in the LT. The re-liquefaction device may include a compressor (LD compressor), a condenser, etc.

Furthermore, the cargo handling room 41 further includes a fuel supply device for supplying the liquefied gas of the LT to the propulsion engine 421 of the engine room 42, etc. The fuel supply device may include a high-pressure pump and a heat exchanger that transport and heat the liquefied gas, and a compressor (LD compressor) and a gas heater that compress and heat the boil-off gas.

In addition, the cargo handling room 41 may be configured to accommodate all devices necessary to process liquefied gas as cargo while the ship 1 is at anchor or in operation. However, hereinafter, the compressor included in the cargo handling room 41 and the motor for driving it will be described, and description of the arrangement of the remaining components will be omitted.

The cargo handling room 41 may be provided outside the hull and may be provided fore of the engine casing 40 on the AD. Unlike the prior art, in the present disclosure, as the cabin 20 is arranged in the FA, free space may be secured on the AD in the AA. The free space may be the space between the CA and the engine casing 40, in which the cargo handling room 41 is arranged.

If the cabin 20 is arranged at the stern, the cargo handling room 41 must be arranged on the TD of the CA, but the present disclosure improves the arrangement and shape of the cabin 20 and moves the cargo handling room 41 to the AA rather than the CA. Therefore, as described above, the hexahedral structure with a certain height is omitted on the ED in the CA, making management of the CA very easy.

The cargo handling room 41 may be arranged to be spaced forward from the AD relative to the engine casing 40. Through this, the engine room 42 at the lower part of the AD faces the portion of the AD exposed to the outside. At this time, the portion between the engine casing 40 and the cargo handling room 41 on the AD is exposed to the outside and an engine room hatch 44 may be provided. The engine room hatch 44 is configured to open the engine room 42, and is opened when maintenance of the engine room 42 is required.

The unloading equipment 25 or provision cranes described above in the FA may be installed in the engine casing 40 or the cargo handling room 41. When replacement of equipment provided in the engine room 42 is required, the engine room hatch 44 is opened and the provision crane provided in the engine casing 40, etc., may pull out the equipment requiring replacement.

The cargo handling room 41 may accommodate the compressor and motor in separate spaces. In other words, the cargo handling room 41 includes a compressor room 411 accommodating a compressor and a motor room 412 accommodating a motor. The compressor room 411 and the motor room 412 may be arranged adjacent to each other but may be separated by a partition, and since the compressor must be driven by a motor, the motor shaft may be provided to pass through the partition.

The compressor room 411 is a space where explosive liquefied gas flows in or out of the compressor, so it may be defined as a dangerous zone, and the motor room 412 is a space separated from the liquefied gas by a partition, so it may be defined as a safety zone. The compressor room 411 and the motor room 412 may be arranged adjacent to each other in the horizontal direction, but the arrangement of the compressor room 411 and the motor room 412 may be determined in various ways.

The compressor room 411 and the motor room 412 may have the same height. In other words, the upper surface of the cargo handling room 41 may be formed as a single, parallel plane. At this time, the upper surface of the cargo handling room 41 may be parallel to the ED of the CA.

The AD where the cargo handling room 41 is provided may have the same height as the UD among the ED of the CA. In other words, the AD may have a relatively lower height than the TD among the ED of the CA, and conversely, may be provided relatively higher than the LD among the ED of the CA and the FD of the FA.

The cargo handling room 41 installed on the AD may have a height corresponding to the height between the UD and the TD in the ED of the CA. Therefore, the lower surface of the cargo handling room 41 may be provided in parallel with the UD, and the upper surface of the cargo handling room 41 may be provided in parallel with the TD. In other words, the cargo handling room 41 has a height corresponding to the height difference between the AD and the ED (TD) of the CA.

In this case, the compressor room 411 and the motor room 412 may each have a height corresponding to the height difference between the AD) and the TD. However, in order to isolate the cargo handling room 41 from the engine room 42, a cofferdam 413 may be added to the floor, the AD, and both the compressor room 411 and the motor room 412 may be stacked on the cofferdam 413. Therefore, the compressor room 411 and the motor room 412 are separated from the engine room 42 through a cofferdam 413 provided in the AD, and may be provided to have a height equal to the height difference between the AD and the TD minus the height of the cofferdam.

The upper surface of the cargo handling room 41 may be provided in parallel with the ED of the CA and directly connected to the ED. In other words, unlike the cabin 20 of the FA, the cargo handling room 41 does not leave a gap with the ED. In the case of the cabin 20, as the sleeping space is arranged rearward from the lower part of the cabin 20 among the residence room 22 provided in the lower part of the cabin 20, the cabin 20 and the ED are spaced anteroposteriorly with a gap for lighting. However, since there is no need for lighting in the cargo handling room 41, the cargo handling room 41 may be directly connected to the TD and may not form a gap with the CA.

In this case, in order to prepare for the vibration caused by the compressor or motor provided in the cargo handling room 41 being transmitted to the CA, a member to dampen vibration may be provided between the cargo handling room 41 and the ED. Alternatively, the transmission of vibration from the cargo handling room 41 to the CA may be suppressed structurally through the thickness, material, shape, or structure of the member.

If the upper surface of the cargo handling room 41 forms the same plane as the ED and is integrated with the ED, the upper surface of the cargo handling room 41 may also be used as a work space for handling cargo. In other words, the space where workers work for cargo handling in the hull may consist of the TD among the ED of the CA, and the cargo handling room 41 may achieve the effect of extending the TD rearward. Therefore, workers may also utilize the upper surface of the cargo handling room 41 as a space for cargo handling work, and for example, a warehouse for cargo handling may be provided on the upper surface of the cargo handling room 41.

For reference, the compressor room 411 in the cargo handling room 41 is defined as a dangerous zone with a risk of explosion, and in that the ED in the CA has a liquefied gas line extending in the anteroposterior direction for transporting cargo through the manifold 12, and a vent mast 11, etc., are provided, a zone at a certain height upward from the ED may be defined as a dangerous zone. Therefore, the compressor room 411 of the cargo handling room 41 may be arranged without separate isolation from the upper space of the ED.

Alternatively, since there may be a difference between the risk level of the compressor room 411 and the risk level of the upper space of the ED, in order to separately protect the upper part of the ED from the compressor room 411, a cofferdam 413, etc., may be applied to the upper surface of the compressor room 411. In other words, structures or materials to protect workers may be added to the upper surface of the cargo handling room 41. Therefore, the upper surface of the cargo handling room 41 may be used as a structure with an extended ED without increasing additional risk factors.

A hatch (not shown) may be provided on the upper surface of the cargo handling room 41 for drawing in or out a compressor or motor. For example, at least one hatch may be provided on the upper surface of the motor room 412 for replacement of the motor.

The upper surface of the cargo handling room 41 forms a plane parallel to the TD of the ED, and in particular, in order to achieve the effect of expanding the TD, the horizontal width of the cargo handling room 41 may be sized to correspond to the horizontal width of the TD. However, in the cargo handling room 41, the horizontal width including the compressor room 411 and the motor room 412 may be smaller than the horizontal width of the trunk deck TD.

As described above, a fire extinguishing agent room 43 may be provided outside the hull in the AA to store fire extinguishing agents for fire extinguishing the engine room 42, etc., and the fire extinguishing agent room 43 may be arranged somewhere other than the engine casing 40. For example, the fire extinguishing agent room 43 may be provided on one side of the cargo handling room 41 in the horizontal direction. Therefore, the compressor room 411, motor room 412, and fire extinguishing agent room 43 may be arranged side by side in the horizontal direction, and the upper surface of the cargo handling room 41 and the upper surface of the fire extinguishing agent room 43 may both be arranged on the same plane. In addition, the horizontal width of the compressor room 411, motor room 412, and fire extinguishing agent room 43 may correspond to horizontal width of the TD.

In other words, in addition to obtaining the effect of expanding the TD rearward through the upper surface of the cargo handling room 41, the AA may obtain the effect of extending the TD rearward even through the upper surface of the fire extinguishing agent room 43. Furthermore, the cargo handling room 41 and the fire extinguishing agent room 43 are arranged side by side, and the overall width of the cargo handling room 41 and the fire extinguishing agent room 43 corresponds to the horizontal width of the TD, so that in the AA, additional work space related to cargo may be secured through the upper surface of the cargo handling room 41.

In the AA, the upper surface of the cargo handling room 41 and the upper surface of the fire extinguishing agent room 43 are provided in parallel with the TD among the ED, so the steering deck 21a, which is provided in parallel with the TD) in the FA, may also be parallel to the upper surface of the cargo handling room 41. Accordingly, in the entire ship 1, the steering deck 21a of the FA, the ED (TD) of the CA and the upper surface of the cargo handling room 41 of the AA may be provided side by side on the same plane.

As described above, the cabin 20 of the FA has a residence room 22 arranged lower than the ED (TD), so the height of the portion that protrudes above the ED (steering house 21) is not high. In addition, the height of the engine casing 40 in the AA is reduced as the combustion equipment 401 is provided on one side away from the stack.

Therefore, when looking at the ship 1 as a whole, based on the ED of the CA, the cabin 20 protrudes only as high as the steering house 21 in the FA, and on the ED, there are (almost) no additional structures other than essential components such as the manifold 12 and vent mast 11, and in the AA, the cargo handling room 41 and fire extinguishing agent room 43 do not protrude further than the ED. In addition, the height of the engine casing 40 in the AA is also minimized. Through this, the ship 1 may be flattened while reducing the upward protrusion heights of all structures provided on the deck of the hull, thereby significantly reducing air resistance that occurs during operation of the ship 1.

In addition, when the workers responsible for various tasks within the ship 1 move between the cabin 20 in the FA and the engine casing 40 of the AA, in addition to moving anteroposteriorly along the length of the hull, movement in the height direction may be minimized. In other words, the worker's movement path is formed in the anteroposterior and horizontal directions, and may be reduced in the height direction. In this case, since equipment (elevators, etc.) that consumes power to move workers up and down within the ship 1 may be minimized or omitted, the power load within the ship may be reduced, and the manpower and costs required for maintenance and repair of the relevant equipment may be significantly reduced.

In addition, the above ship 1 may improve the escape route so that workers located on the engine casing 40 or the ED may quickly escape when an accident occurs on the ship 1. For example, since the ED (TD) and the steering deck 21a of the cabin 20 are provided side by side, if workers working on the ED need to escape, they may move to the steering deck 21a parallel to the ED and easily escape using escape equipment.

The engine casing 40 and the cargo handling room 41 may be provided on the AD and spaced anteroposteriorly to provide the engine room hatch 44. However, for the movement of workers between the cargo handling room 41 and the engine casing 40, a portion of the engine casing 40 and the upper surface of the cargo handling room 41 may be connected to each other through a separate passage structure.

The engine casing 40 is provided in a staircase structure with a lower stage and a higher stage, and the lower stage of the engine casing 40 may be provided on the same plane as the upper surface of the cargo handling room 41. Alternatively, the lower stage of the engine casing 40 may be provided slightly higher than the upper surface of the cargo handling room 41, but there may not be a significant difference vertically.

Therefore, a passage structure may be provided vertically between the cargo handling room 41 and the lower stage of the engine casing 40 without steps. This allows workers to easily move from the cargo handling room 41 to the lower stage of the engine casing 40. In particular, the engine casing 40 may be provided with escape equipment on both sides as mentioned in the cabin 20, so workers in the cargo handling room 41 may escape after going over to the engine casing 40 when necessary.

In addition, since provision cranes, etc., may be provided on both sides of the engine casing 40, workers may easily move between the cargo handling room 41 and the engine casing 40 to perform maintenance on the provision crane.

Hereinafter, the lower part of the AD in the AA, i.e., the interior of the hull, will be described. An engine room 42 is provided inside the hull in the AA. The engine room 42 is provided with a propulsion engine 421 for propulsion of the ship 1 and a power generation engine 422 to cover the power demand within the ship 1.

In addition, a switchboard 423 may be provided in the engine room 42 to transmit power generated from the power generation engine 422, etc., to a demand source. The switchboard 423 controls the transmission of generated power. In addition, a transformer (not shown) may be provided adjacent to the switchboard 423, and the transformer may change the voltage of the generated power to the specifications required by the demand source. At this time, the switchboard 423 and the transformer may be accommodated in one room.

The engine room 42 may be provided with a configuration for supplying fuel to the propulsion engine 421 and the power generation engine 422. The configuration for supplying fuel into the engine room 42 may be a fuel line. If the fuel is cargo (liquefied gas), the fuel changes in the cargo handling room 41 to the temperature and pressure required by the propulsion engine 421, etc. Afterwards, the fuel line is provided from the cargo handling room 41 to the engine room 42, and fuel is delivered from the cargo handling room 41 to the propulsion engine 421 of the engine room 42.

Alternatively, the fuel supplied into the engine room 42 may be a different type of fuel from cargo, and may be oil fuel from the tank room 34 provided in the FA. At this time, the fuel may extend from the fuel tank 342 of the tank room 34 to the engine room 42 via the passage way of the CA, and may pass through the pump room 33 of the FA. n this case, a fuel line through which oil fuel flows may be provided in the engine room 42.

In other words, a fuel line is provided in the engine room 42 to supply fuel to the propulsion engine 421 and the power generation engine 422, respectively, and additionally, in case the propulsion engine 421, etc., uses two types of fuel, fuel lines that transmit different types of fuel may be provided.

In addition, the engine room 42 may further include a discharge line for discharging excess fuel that is not supplied to the propulsion engine 421, and the discharge line may deliver fuel to the vent mast 11 provided in the CA. Alternatively, the discharge line may be connected to the combustion equipment 401 of the engine casing 40.

The fuel line provided in the engine room 42 may be branched and connected to the combustion equipment 401 of the engine casing 40. In other words, the fuel line extending from the cargo handling room 41 to the engine room 42 branches off to the combustion equipment 401 upstream of the propulsion engine 421, thereby distributing fuel to the combustion equipment 401. The fuel line extending from the cargo handling room 41 may be distributed to the propulsion engine 421, the power generation engine 422, the combustion equipment 401, etc., through the gas valve unit.

In addition, an exhaust line may be provided in the engine room 42 in addition to the fuel line and discharge line. The exhaust line is a pipe provided to discharge exhaust generated during operation of the propulsion engine 421 or power generation engine 422 to the outside, and may deliver exhaust from the propulsion engine 421 in the engine room 42 to the stack of the engine casing 40 or the exhaust treatment equipment 402.

The exhaust line may extend from each of the propulsion engine 421 and the power generation engine 422 and be connected to the engine casing 40. At this time, the stack of the engine casing 40 is provided in the central portion of the engine casing 40 in the horizontal direction, and the propulsion engine 421 may be provided in the central portion of the engine room 42 in the horizontal direction. Therefore, the exhaust line extending from the propulsion engine 421, etc., to the stack may have a minimized portion extending in the horizontal direction and mainly extend in the vertical direction.

Such an arrangement is when there is only one propulsion engine 421, and when there are two or more propulsion engines 421 in a twin-axle ship, one propulsion engine 421 may be arranged on the left and right sides of the engine room 42, respectively.

Within the engine room 42, the propulsion engine 421 may be provided at the lower part. A shaft is connected to the propulsion engine 421, and the shaft may be connected to propulsion equipment provided at the rear in the AA. In addition, the power generation engine 422 may be provided at the upper part of the propulsion engine 421, and the power generation engine 422 may be spaced upward relative to the propulsion engine 421. An engine deck (GD) may be provided on the upper part of the engine room 42 to support the power generation engine 422, and the GD is provided on the upper part of the propulsion engine 421 to secure the space between the power generation engine 422 and the propulsion engine 421.

The GD may be a horizontal bulkhead provided in the anteroposterior direction within the engine room 42. In other words, the GD may be configured to partition the inside of the engine room 42 vertically, and the power generation engine 422 may be provided above the GD and the propulsion engine 421 may be provided below the GD.

The GD may be provided only partially in the anteroposterior direction in the engine room 42. In other words, the anteroposterior length of the GD is smaller than the anteroposterior length of the engine room 42, so that the front end of the GD is fixed to the front surface of the engine room 42, and the rear end of the GD may be spaced forward from the rear surface of the engine room 42. Through this, the exhaust line from the propulsion engine 421 to the engine casing 40, etc., may be extended without penetrating the GD.

Alternatively, the GD may be provided along the entire length anteroposteriorly of the engine room 42, and the exhaust line may extend vertically through the GD.

In the conventional case, the propulsion engine 421 and the power generation engine 422 in the engine room 42 may be provided at positions offset in the anteroposterior direction. Therefore, the minimum anteroposterior length of the engine room 42 may be limited by the sum of the installation lengths of the propulsion engine 421 and the power generation engine 422. In addition, in the conventional case, since the engine casing 40 and the cabin 20 are provided in the upper part of the engine room 42, the anteroposterior length of the engine room 42 must have a relatively sufficient size.

On the other hand, in the present disclosure, the cabin 20 is moved and arranged in the FA rather than the stern, and the engine casing 40 and the cargo handling room 41 are arranged in the AA. Since the cargo handling room 41 requires a smaller area compared to the cabin 20, the anteroposterior length of the cargo handling room 41 is significantly reduced compared to the cabin 20.

Therefore, the AD, where the engine casing 40 and the cargo handling room 41 are provided, has a margin to reduce the anteroposterior length compared to the case where the cabin 20 is arranged in the AA. However, if the propulsion engine 421 and the power generation engine 422 are arranged offset anteroposteriorly in the engine room 42, the anteroposterior length of the engine room 42 cannot be reduced.

However, in the present disclosure, the power generation engine 422 may be arranged to overlap the propulsion engine 421 in the vertical direction within the engine room 42. In other words, the GD provided in the engine room 42 is provided directly above the propulsion engine 421 and supports the power generation engine 422, and the power generation engine 422 may be provided so that a portion between the front and rear ends overlaps the portion between the front and rear ends of the propulsion engine 421 in the vertical direction.

In the engine room 42 of the present disclosure, the power generation engine 422 may be arranged above the propulsion engine 421, instead of being arranged fore or aft of the propulsion engine 421. In this case, the anteroposterior of the engine room 42 only needs to secure the anteroposterior installation length of the propulsion engine 421, making it possible to reduce the anteroposterior length of the engine room 42.

Therefore, in the AA, there is no residential space or steering space in the upper part of the AD, and furthermore, as the power generation engine 422 is arranged directly above the propulsion engine 421 within the engine room 42, the anteroposterior length of the engine room 42 itself may be significantly reduced compared to the prior art.

In other words, the engine room 42 of the present disclosure is not affected by the anteroposterior length for installation of the power generation engine 422. The engine room 42 may be composed of only the anteroposterior length necessary for the arrangement of the engine casing 40, the cargo handling room 41, and the engine room hatch 44 provided therebetween.

In this case, the power generation engine 422 may be arranged to be offset in the vertical direction from the engine room hatch 44 so as not to interfere with equipment transfer inside and outside the engine room 42 when the engine room hatch 44 is opened. In other words, the power generation engine 422 does not overlap the lower part of the engine room hatch 44.

In the engine room 42, the fuel line, exhaust line, etc., may be arranged in various ways in the upper part of the axis of the propulsion engine 421, i.e., in the rear portion of the power generation engine 422. In addition, a fuel tank 342 for storing oil fuel may be arranged in the corresponding portion. However, when the fuel tank 342 is arranged in the engine room 42, the fuel tank 342 may be partitioned so as to be separated from the space in the engine room 42 where the propulsion engine 421, etc., are provided.

As previously described in the FA, a generator 36 may be provided inside the hull of the FA. Therefore, the power generation engine 422 may be minimized or omitted in the engine room 42. In this case, the anteroposterior length of the engine room 42 may be reduced to the level necessary for mounting the propulsion engine 421.

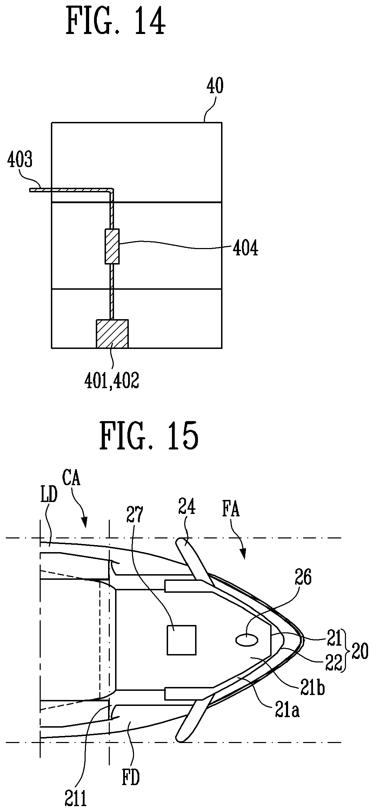

FIG. 14 is a partial side view of a ship in accordance with a second embodiment of the present disclosure.

Hereinafter, the description will focus on the differences between the present embodiment and the previous embodiment, and parts omitted from the description will be replaced with the previous content. This also applies to other embodiments.

Referring to FIG. 14, the ship 1 according to the second embodiment of the present disclosure has a change in the AA compared to the previous embodiment. In the AA of the present embodiment, an engine casing 40 and a cargo handling room 41 are provided, and the engine casing 40 may discharge the exhaust of the engines 421 and 422 to the outside through a stack and the like.

In addition, the engine casing 40 is provided with combustion equipment 401 and exhaust treatment equipment 402, and when the engine casing 40 discharges exhaust from the combustion equipment 401 to the outside and discharge exhaust from the exhaust treatment equipment 402 to the outside, the exhaust discharge direction may be different from that of the previous embodiment.

In other words, the present embodiment may allow exhaust passing through the exhaust treatment equipment 402 to be discharged to the rear of the engine casing 40 rather than to the top. An exhaust pipe 403 is connected to the exhaust treatment equipment 402, which includes selective catalytic reduction equipment, etc., and the exhaust pipe 403 delivers exhaust discharged from the engines 421 and 422, etc., to the exhaust treatment equipment 402. The exhaust that has passed through the exhaust treatment equipment 402 exits to the outside again through the exhaust pipe 403, and downstream of the exhaust treatment equipment 402, the exhaust pipe 403 is bent at least once and extends horizontally toward the rear.

At this time, the engine casing 40 has a separate exhaust port at the rear surface, and the exhaust port provided at the rear surface of the engine casing 40 may be configured to exhaust via the exhaust treatment equipment 402. In other words, the exhaust port may implement the function of a stack.

Therefore, in the present embodiment, the engine casing 40 minimizes or omits the stack protruding upward from the central portion in the horizontal direction, and the exhaust pipe 403 extending from the exhaust treatment equipment 402 is bent to discharge exhaust toward the rear. Therefore, in the present embodiment, the height of the engine casing 40 may be further lowered.

A silencer 404 may be added to the exhaust pipe 403 provided downstream of the exhaust treatment equipment 402. The silencer 404 may be provided in a vertical portion or a horizontal portion of the exhaust pipe 403. At this time, the silencer 404 may be an integrated form of a porous silencer 404 and a low-frequency reducer.

However, while the silencer 404 is added to reduce noise transmitted to workers, in the present disclosure, the cabin 20 where workers mainly stay is arranged in the FA rather than the AA. Therefore, there is no concern that the noise of the engine casing 40 will be transmitted to the residential space or steering space. Because of this, it is possible to remove the silencer 404 from the exhaust pipe 403, and in this case, the height of the engine casing 40 may be further lowered. However, the portion where the exhaust pipe 403 extends horizontally may be formed above a certain height relative to the AD. This is to protect workers working on the AD from exhaust.

In addition to the exhaust passing through the exhaust treatment equipment 402 being discharged to the rear of the engine casing 40 through the exhaust pipe 403 having a horizontal portion, exhaust may also be discharged through the exhaust pipe 403 of the combustion equipment 401 in the same manner. In other words, downstream of the combustion equipment 401, the exhaust pipe 403 is bent at least once and extends horizontally rearward, so that the exhaust of the combustion equipment 401 may be discharged to the rear of the engine casing 40.

However, when exhaust is discharged to the rear of the engine casing 40, there may be concerns about contamination of the rear surface of the engine casing 40 depending on conditions such as headwinds. When exhaust from the engines 421 and 422, etc., is discharged upward through the stack, there is a low risk that the exhaust, which has a density lower than air, will contaminate the engine casing 40, but when exhaust is discharged to the rear of the engine casing 40, preparation must be made for contamination of the rear surface of the engine casing 40. Therefore, physical or chemical reinforcement may be provided to the rear surface of the engine casing 40 to protect the outer surface of the engine casing 40 from exhaust contaminants and high temperature of the exhaust. For example, a special coating is applied to the rear surface of the engine casing 40 to create specifications that sufficiently withstand high temperatures and exhaust contaminants.

In addition, the exhaust pipes 403 that discharge exhaust to the rear of the engine casing 40 may prepare for rainy weather during the operation of the ship 1. In other words, a separate rain cover structure may be provided on the upper part of the exhaust pipe 403 protruding rearward from the rear surface of the engine casing 40. In addition, a filter or shape that prevents rainwater from entering may be applied to the discharge end of the exhaust pipe 403.

FIG. 15 is a partial plan view of a ship in accordance with a third embodiment of the present disclosure.

Referring to FIG. 15, the ship 1 according to the third embodiment of the present disclosure has a change in the FA. Specifically, in the present embodiment, the cabin 20 is provided in the FA and the wing bridge 24 is applied to both sides of the cabin 20, while the shape of the wing bridge 24 may be changed.

The wing bridge 24 extends from the cabin 20 by the maximum horizontal width of the hull, and the present disclosure reduces air resistance by improving the shape of the cabin 20 so that the width decreases farther forward, while allowing the wing bridge 24 to protrude horizontally. Therefore, even if air resistance is somewhat reduced by the cabin 20, air resistance is caused by the protrusion of the wing bridge 24.

The present embodiment improves the direction in which the wing bridge 24 extends to both left and right sides of the cabin 20, thereby minimizing air resistance through the wing bridge 24. Specifically, the wing bridge 24 may have an inclination that the fore edge and the aft edge recede toward the end.

In other words, the wing bridge 24 has an inclination that both fore edge and the aft edge recede toward the end. In other words, the wing bridge 24 may have an inclination in which the anteroposterior center lines recede from the base to the end.

As described above, the cabin 20 in which the wing bridge 24 is provided may have a curved shape convex toward the front or a shape similar to the FD. This means that both side surfaces of the cabin 20 have an inclination that expands horizontally from the front end to the rear end. In this case, the wing bridge 24 may be provided so that its fore edge and aft edge are inclined in the same direction as the outer edge of the cabin 20. In other words, the anteroposterior center line of the wing bridge 24 between the base and the end of the wing bridge 24 may have a difference of less than 30 degrees from the inclination formed by the side surface of the cabin 20.

This wing bridge 24 forms an obtuse angle in the anteroposterior direction based on the portion where the fore edge is connected to the cabin 20. In addition, the wing bridge 24 may form an acute angle in the anteroposterior direction based on the portion where the aft edge is connected to the cabin 20.

Therefore, in the present embodiment, in addition to obtaining an effect of reducing air resistance by making the shape of the cabin 20 into a bullet type so that the cabin 20 splits the air, by deforming the wing bridge 24 protruding from the cabin 20 on both sides to be inclined rearward, the increase in air resistance due to the protrusion of the wing bridge 24 may be minimized.

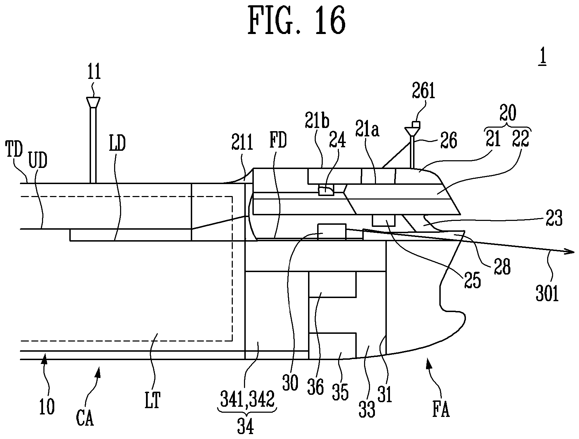

FIG. 16 is a partial side view of a ship in accordance with a fourth embodiment of the present disclosure.

Referring to FIG. 16, the shape of the cabin 20 of the ship 1 according to the fourth embodiment of the present disclosure may be different from that of the previous embodiment.

For example, the cabin 20 of the present embodiment may be provided with a steering house 21 at the upper part and a residence room 22 at the lower part based on the steering deck 21a, and the front surface of the steering house 21 and the front surface of the residence room 22 may be continuously connected vertically without any steps.

In other words, when viewed from the side, the line (slanted line or curve) formed by the front end of the residence room 22, which is the lower part of the cabin 20, may be smoothly connected to the line (slanted line or curve) formed by the front end of the steering house 21, which is the upper part of the cabin 20.

In the case of the previous embodiment, the lower end of the upper part of the cabin 20 is receded compared to the front end of the lower part of the cabin 20 with respect to the steering deck 21a, so that the fore portion of the steering deck 21a is exposed to the outside. On the other hand, in the present embodiment, in order to further reduce air resistance caused by the cabin 20, the step is eliminated between the lower part of the cabin 20 and the upper part of the cabin 20, and the front surface of the cabin 20 forms one inclined plane (curved surface) from the lower end to the upper end.

The lower part of the cabin 20 may form a straight line with an inclined front end, and the upper part of the cabin 20 may form a straight line with an inclined front end. However, compared to the lower part of the cabin 20, the upper part of the cabin 20 may have a relatively greater degree of rearward slope from the lower end to the upper end. In other words, the front end of the cabin 20 may form a bent shape based on the steering deck 21a.

Alternatively, the lower part of the cabin 20 may form a straight line with the front end inclined, and the upper part of the cabin 20 may form a curved line with the front end convex forward. In this case, the front end of the cabin 20 may continue uniformly from the lower surface to the steering deck 21a, but may be convexly curved forward as it goes from the steering deck 21a to the compass deck 21b.

Alternatively, the lower part and the upper part of the cabin 20 may form a curved line where the front end is all convex forward. In this case, the front end of the cabin 20 may form an overall forward convex curve between the lower end and the upper end.

In the present embodiment, the steering deck 21a may not be exposed to the outside fore of the cabin 20. However, the horizontal width of the upper part and the lower part of the cabin 20 are different, so the steering deck 21a may be exposed to the outside on both sides of the cabin 20, and the workers may access the wing bridge 24 through the steering deck 21a exposed to the outside.

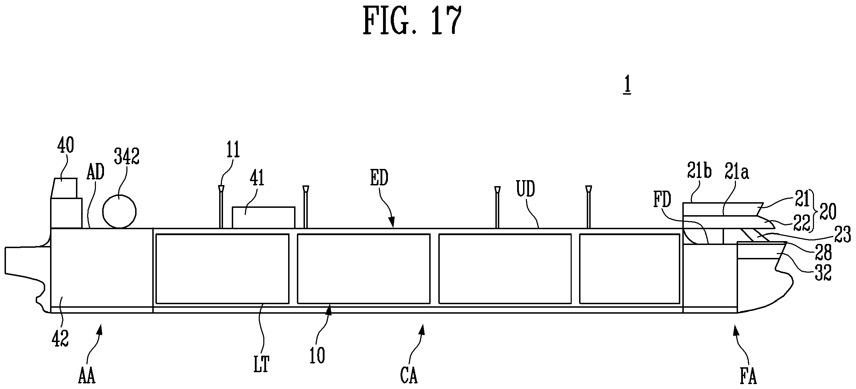

FIG. 17 is a side view of a ship in accordance with a fifth embodiment of the present disclosure.

Referring to FIG. 17, the ship 1 according to the fifth embodiment of the present disclosure may be a different ship type from the ship 1 in the first embodiment. For example, the ship 1 of the present embodiment may be a gas carrier that transports liquefied natural gas or ammonia as cargo. In other words, the cargo of the present embodiment may be a gas with a boiling point of -100 degrees Celsius or higher and lower than room temperature. Hereinafter, the ship 1 of the present embodiment will be described assuming that it is a liquefied petroleum gas carrier.

The ship 1 of the present embodiment may be divided into CA, FA, and AA, where the ED of the CA may correspond to the UD. In other words, the TD may not protrude from the CA of the present embodiment, and the UD that separates the interior and exterior of the hull throughout the CA may be the ED of the CA.

The CA may include an LT for storing liquefied petroleum gas, etc. A plurality of LTs may be provided at regular intervals in the anteroposterior direction inside the hull. At this time, the LT may be an independent type that is manufactured separately from the outside and then mounted inside the hull. The LT may be a membrane type formed by installing an insulating wall inside the hull.

When storing liquefied gas as cargo, the CA may be provided with a vent mast 11 as described in the previous embodiment. The vent mast 11 may be provided on the UD according to the number of the LTs. In addition, a manifold (not shown) is provided in the CA to handle loading and unloading of cargo.

A cargo handling room 41 may be provided in the CA. In the case of the previous embodiment, the cargo handling room 41 was arranged in the AA to exclude a separate protruding structure on the ED of the CA. On the other hand, in the present embodiment, the AD is arranged in parallel with the ED of the CA, and the cargo handling room 41 may be arranged relatively rearward of the ED of the CA.

As will be described later, in the AA, a fuel tank 342 storing a liquefied gas different from the cargo may be provided on the AD, so the cargo handling room 41 may be arranged in the CA rather than the AA.

The FA is provided fore of the CA, and the FD is provided to divide the interior and exterior of the hull. The cabin 20 is provided on the upper part of the FD, and the cabin 20 is supported by a support 23, and the support 23 is connected to the bulwark 28 surrounding the fore of the FD.

The cabin 20 may include a residence room 22 and a steering house 21, and the cabin 20 is spaced upward from the FD to ensure mooring operations on the FD. In other words, the FD is provided with mooring equipment 30, and the FD may form a sunken deck as it is lowered relative to the ED of the CA.

However, in the first embodiment provided with a TD, compared to the height difference between the TD and the FD, the height difference between the UD and the FD in the present embodiment may be relatively small. On the other hand, the height difference between the UD and the FD in the present embodiment may be larger than the height difference between the UD and the FD in the previous embodiment.

In the previous embodiment, considering the height between the TD and the FD, a portion of the residence room 22 may be provided below the TD. On the other hand, in the present embodiment, the height between the FD compared to the ED of the CA may correspond to the height required for installation of the mooring equipment 30. Therefore, in the present embodiment, the lower surface of the cabin 20 supported by the support 23 may be provided at least at a height parallel to the ED.

In this case, in order to resolve the compass deck 21b of the cabin 20 being excessively higher than the ED, in the cabin 20 of the present embodiment, at least a portion of the residence room 22 may be provided on the FD. In other words, the floor of the residence room 22 may be formed by the FD, and the upper surface of the corresponding residence room 22 may be parallel to the ED.

In other words, the residence room 22 included in the cabin 20 is provided on the upper part of the FD and at least a portion is arranged lower than the ED. In this case, mooring equipment 30 is provided fore of the residence room 22 provided directly on the FD.

The present embodiment is a liquefied petroleum gas carrier, and the square coefficient may be larger than that of the previous liquefied natural gas carrier. Therefore, in the ship 1 of the present embodiment, since the area of the FD in the FA may be larger than that of the first embodiment, in the present embodiment, mooring equipment 30 may be arranged on the FD, and a portion of the residence room 22 may be arranged aft of the mooring equipment 30.

The residence room 22 included in the cabin 20 necessarily requires lighting, and the front surface of the residence room 22 arranged on the FD is exposed to the outside. Therefore, the residence room 22 provided on the FD may be illuminated from the fore past the mooring equipment 30.

In the case of the previous embodiment, the cabin 20 is spaced forward relative to the ED and connected through a bracket 211, which is to ensure lighting of the rear surface for the steering house 21 provided in the lower part of the cabin 20. On the other hand, in the present embodiment, lighting of the front surface is guaranteed for the residence room 22 provided on the FD, and lighting of the rear surface is guaranteed for the residence room 22 provided higher than the ED, so the cabin 20 is not spaced forward relative to the ED and may be integrally connected to the ED.

This cabin 20 has a steering deck 21a and a compass deck 21b, and the steering deck 21a may be provided higher upward compared to the ED of the CA. However, the vertical height difference between the ED and the steering deck 21a may be smaller than the vertical height difference between the ED and the FD.

The cabin 20 may have a curved shape that is convex forward when viewed in plan. In addition, the residence room 22, which is the lower part of the cabin 20, has an inclination where the front end recedes from the lower end to the upper end when viewed from the side, and the steering house 21, which is the upper part of the cabin 20, has an inclination where the front end moves forward from the lower end to the upper end when viewed from the side. Therefore, the front end of the portion supported by the support 23 in the cabin 20 forms a '<' shape.

In addition, the residence room 22 provided in the lower part of the cabin 20 is partially supported by the support 23 and is spaced upward relative to the FD, thereby forming an installation space for the mooring equipment 30, and the rest is provided so that the floor is formed by the FD below the ED, and lighting is provided through the front surface. Therefore, the residence room 22 included in the cabin 20 may be arranged in an 'L' shape.

Alternatively, the cabin 20 may have a steering house 21 at the upper part and a residence room 22 at the lower part based on a horizontal plane supported by the support 23. In other words, the steering deck 21a, which forms the floor of the steering house 21 in the cabin 20, may be provided parallel to the ED of the CA. In this case, the support 23 may support the lower surface of the steering house 21. In addition, the residence room 22, which forms the lower part of the cabin 20, is provided below the ED and the floor is defined by the FD, and the fore, etc., is exposed to the outside to get lighting through the front surface. In this case, the residence room 22 may be formed to have a relatively small anteroposterior length compared to the steering house 21.

Inside the hull in the FA, an impact protection bulkhead 31 is provided. In addition, similar to the previous embodiment, a bosun store 32, a pump room 33, a tank room 34, etc., may be arranged inside the hull.

The AA is provided aft of the CA. The AA is provided with the AD that divides the interior and exterior of the hull, and the engine room 42 is formed inside the hull to accommodate the propulsion engine 421, etc.

The engine casing 40 is provided on the AD. In addition, the fuel tank 342 may be provided on the AD. In the present embodiment, if the cargo stored in the CA is liquefied petroleum gas, if the propulsion engine 421 is a liquefied petroleum gas engine 421, 422, a separate fuel tank 342 may not be provided outside or inside the hull, and cargo may be delivered to the propulsion engine 421 through the cargo handling room 41.

However, the present embodiment may be a liquefied petroleum gas carrier equipped with the liquefied natural gas engine 421, 422 as the propulsion engine 421, and liquefied natural gas, which is a fuel, may be stored in the fuel tank 342 on the AD.

As a result, the cargo handling room 41 may not be provided on the AD but may be arranged on the ED of the CA. It is also possible to provide the fuel tank 342 on one side in the horizontal direction on the AD and the cargo handling room 41 on the other side.

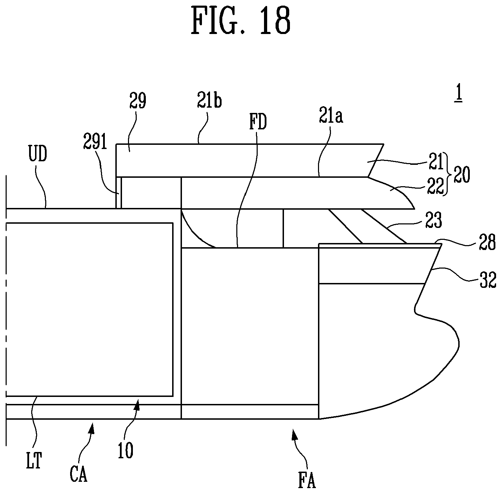

FIG. 18 is a partial side view of a ship in accordance with a sixth embodiment of the present disclosure.

Referring to FIG. 18, the ship 1 according to the sixth embodiment of the present disclosure may secure more anteroposterior area of the cabin 20 compared to the previous fifth embodiment. For example, the cabin 20 has an extension unit 29, and the extension unit 29 expands the internal volume of the cabin 20, but is located on the CA rather than the FA.

In the present embodiment, the cabin 20 has the residence room 22 of the lower part and the steering house 21 of the upper part, and the steering deck 21a may be provided above the ED of the CA. At this time, at least a portion of the cabin 20 is provided above the ED, and specifically, a portion of the steering house 21 is arranged above the ED.

The residence room 22 forming the lower part of the cabin 20 includes a portion supported by the support 23 and whose floor is provided parallel to the ED, and a remaining portion whose floor is defined by the FD. In this case, the remaining portion of the residence room 22 cannot be extended rearward due to the front surface of the CA. In addition, a portion of the residence room 22 does not extend to the rear. This is because mounting the cabin 20 directly on the upper part of the ED of the CA does not satisfy international regulations (classification, IMO regulations, etc.).

According to known international regulations, the cabin 20 must not be mounted above the CA. However, in the present embodiment, it is possible to have the extension unit 29 in the cabin 20 and have a structure in which the extension unit 29 is located above the CA but is not directly mounted on the ED.

For example, the cabin 20 has steering house 21 of the upper part extending rearward. The steering deck 21a, which forms the floor of the steering house 21, is provided above the ED of the CA, so even if the steering house 21 extends rearward to form the extension unit 29, the extension unit 29 is not structured to be mounted on the ED of the CA.

In this case, the steering deck 21a is provided to extend from the FA to the CA, and the extension unit 29 may be arranged with its lower surface spaced upward from the ED. In other words, the cabin 20 may satisfy the international regulations, as the cabin 20 is not mounted above the CA according to regulations, and only a part of the cabin 20 is arranged above a certain height from the ED. At this time, the certain height may be a value set in preparation for a situation where liquefied gas leaks from the ED.

If the extension unit 29 protrudes rearward by a certain length from the upper part of the cabin 20, support for the extension unit 29 may be necessary. Therefore, the pillar 291 may be used in the extension unit 29. The pillar 291 supports the extension unit 29 so that the lower surface of the extension unit 29 is spaced a certain height above the ED.

The upper end of the pillar 291 may be fixed to the lower surface of the extension unit 29 and the lower end may be fixed to the ED. In this case, the pillar 291 may be provided vertically. Alternatively, the upper end of the pillar 291 may be fixed to the lower surface of the extension unit 29, and the lower end may be fixed to the rear surface of the residence room 22 in the cabin 20. In this case, the pillar 291 is provided to be inclined, and the lower surface of the extension unit 29, the pillar 291, and the rear surface of the residence room 22 may form a right triangle shape when viewed from the side. In addition, the upper end of the pillar 291 is fixed to the lower surface of the extension unit 29 and the lower end is fixed to a portion of the hull other than the ED to support the extension unit 29.

In this way, when the extension unit 29 is added to the cabin 20, although the extension unit 29 is located within the CA, safety may be guaranteed by being provided at a certain height above the ED. In addition, in the present embodiment, as the internal volume of the cabin 20 is secured using the extension unit 29, the air resistance caused by the cabin 20 may be reduced by reducing the flat cross-section of the cabin 20 or the height of the compass deck 21b.

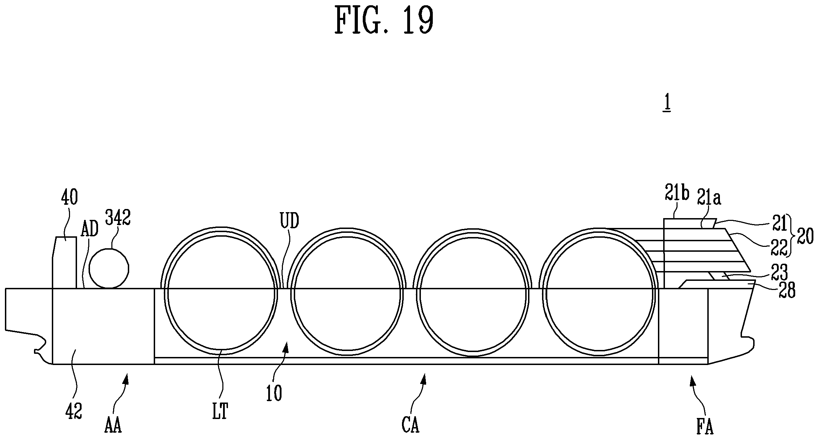

FIG. 19 is a side view of a ship in accordance with a seventh embodiment of the present disclosure.

Referring to FIG. 19, the ship 1 according to the seventh embodiment of the present disclosure may be a different ship type compared to the previous embodiment. For example, the ship 1 of the present embodiment may be a gas carrier that stores liquefied gas, and in particular, it may be a liquefied natural gas carrier that transports liquefied natural gas. However, the present embodiment may be a liquefied natural gas carrier like the first embodiment, but while the first embodiment is equipped with a membrane-type LT, the present embodiment may be different in that it is equipped with a MOSS-type LT.

Alternatively, the present embodiment, unlike the first embodiment, may be a liquefied hydrogen carrier. In other words, the cargo in the present embodiment may be hydrogen with a very low boiling point, and sufficient insulation (vacuum, etc.) may be applied to the LT. Alternatively, in the present embodiment, the cargo may have a high triple point, requiring storage through a pressure vessel, and for example, the cargo may be carbon dioxide, etc.

The ship 1 of the present embodiment is also divided into the CA, FA, and AA, and the LT may be provided in the CA. At this time, the LT is provided in a spherical shape, and approximately the upper half may protrude toward the upper part of the ED.

In the CA, a plurality of LTs may be spaced apart in the anteroposterior direction, and the spherical LT may protrude upward from the ED. However, the CA may be provided with a tank cover (not shown) that covers the upper half of the LT at once.

The cabin 20 is provided in the FA. The cabin 20 may be provided on the FD, and the lower surface of the cabin 20 may be supported by the support 23 so as to be spaced upward from the FD. The support 23 may have its upper surface fixed to the lower surface of the cabin 20 and its lower surface fixed to the bulwark 28 surrounding the front end of the FD.

In the CA of the present embodiment, the upper part of the LT protrudes to a considerable height compared to the ED. At this time, the cabin 20 of the FA may be provided so that the steering deck 21a is parallel to or lower than the upper end of the LT. In this case, the steering house 21 of the cabin 20 may be provided higher than the upper end of the CA.

On the other hand, in the present embodiment, in order to prevent the cabin 20 from generating additional air resistance compared to the LT, the compass deck 21b may be provided at a height lower than the upper end of the LT. Considering the height at which the LT protrudes, even if the compass deck 21b of the cabin 20 is provided lower than the upper end of the LT, the cabin 20 is provided as a three-story or more structure to secure sufficient volume.

However, in the present embodiment, the reason why the steering deck 21a of the cabin 20 is provided above the upper end of the LT is to establish the cargo management room aft of the steering house 21 and to implement surveillance of the CA from the cargo management room.

Therefore, when the compass deck 21b of the cabin 20 is provided lower than the upper end of the LT, the cargo management room may be added separately at an appropriate location. At this time, the cargo management room may be provided higher than the steering house 21.

The FD of the FA may be provided at the same height as the ED of the CA. This is because there is less need to lower the height of the FD, considering the height at which the LT protrudes in the CA. However, similar to the embodiments described aobve, the FD may be vertically displaced relative to the lower surface of the cabin 20, and mooring equipment 30 may be installed.

The rear surface of the cabin 20 and the LT at the forefront may be connected with a bracket 211, etc. Alternatively, it is possible for the cabin 20 itself to extend rearward and be integrated with the LT. Alternatively, the rear surface of the cabin 20 may be provided relatively vertically and may be spaced apart from the LT in the anteroposterior direction.

The AA forms an engine room 42 inside the hull and accommodates a propulsion engine 421, etc. In addition, in the AA, the AD may be provided parallel to the ED of the CA and the FD of the FA.

An engine casing 40 may be provided on the AD, and a fuel tank 342 may be provided fore of the engine casing 40. Placing the fuel tank 342 on the AD corresponds to the case where the propulsion engine 421 is an engine 421, 422 that consumes liquefied gas other than cargo. If the propulsion engine 421 consumes cargo as fuel, the fuel tank 342 on the AD may be omitted.

A cargo handling room 41 may be provided on the AD. Alternatively, the cargo handling room 41 may be installed in a concave space fore or aft of the upper half of the spherical LT protruding above the ED.

The present disclosure may further include, as additional embodiments, a combination of at least one of the embodiments described above with known techniques and a combination of the embodiments described above.

Although the present disclosure has been described in detail through specific embodiments, it is intended to describe the present disclosure in detail, and the present disclosure is not limited thereto, and it will be apparent that modifications or improvements are possible by those skilled in the art within the technical spirit of the present disclosure.

All simple modifications and variations of the present disclosure fall within the scope of the present disclosure, and the specific scope of protection of the present disclosure will be made clear by the appended claims.

## Claims

1. A ship comprising a cargo area for storing cargo, a forecastle area provided fore of the cargo area, and an aft area provided aft of the cargo area,
wherein the forecastle area comprises a fore deck dividing an interior and an exterior of a hull, and
a cabin is provided on an upper part of the fore deck, and
wherein the cabin has a flat cross-section with a width that decreases forward toward a bow.

2. The ship of claim 1, wherein the cabin comprises a steering house and a residence room provided in a lower part of the steering house.

3. The ship of claim 2, wherein the cabin has a shape in which, compared to a lower part forming the residence room, an upper part forming the steering house is receded.

4. The ship of claim 3, wherein the cabin has a steering deck forming a floor of the steering house, and
the lower part forming the residence room and the upper part forming the steering house are connected vertically with a step relative to the steering deck.

5. The ship of claim 3, wherein the cabin has a shape in which, the lower part forming the residence room has a flat cross-section that decreases upward, and the upper part forming the steering house has a flat cross-section that increases upward.

6. The ship of claim 2, wherein the cabin further comprises a cargo management room provided aft of the steering house toward the cargo area.

7. The ship of claim 2, wherein the cabin is arranged to be spaced apart from the cargo area and at least a rear surface of the residence room provided aft of the cabin is exposed to the outside.

8. The ship of claim 2, wherein the residence room is provided on the fore deck, and at least a front surface of the residence room is exposed to the outside.

9. The ship of claim 1, wherein the fore deck forms a sunken deck.

10. A ship comprising a cargo area for storing cargo, a forecastle area provided fore of the cargo area, and an aft area provided aft of the cargo area,
wherein the forecastle area comprises a fore deck dividing an interior and an exterior of a hull, and
a cabin is provided on an upper part of the fore deck, and
wherein the cabin has at least a fore with a flat cross-section similar to the fore deck.

11. The ship of claim 10, wherein the cabin is supported by a support so that a lower surface of the cabin is spaced a certain height above the fore deck.

12. The ship of claim 11, wherein the fore deck forms a sunken deck.
